# EUROPÄISCHE PATENTSCHRIFT

(11) **EP 3 787 866 B1**
(45) Veröffentlichungstag und Bekanntmachung des Hinweises auf die Patenterteilung: **15.12.2021**
(21) Anmeldenummer: 20746118.7
(22) Anmeldetag: 16.07.2020
(51) Int. Cl.: B29C 33/30

(54) **SYSTEM UND VERFAHREN ZUM FLEXIBLEN AUSBILDEN EINER GUSSFORM ZUM HERSTELLEN EINES GUSSMODELLS**
SYSTEM AND METHOD FOR FLEXIBLY FORMING A CASTING MOLD FOR MANUFACTURING A MODEL CASTING
SYSTÈME ET PROCÉDÉ DE FORMATION FLEXIBLE D'UN MOULE DE COULAGE POUR LA FABRICATION D'UN MODÈLE COULÉ

(30) Priorität: 17.07.2019 DE 102019119431
(43) Veröffentlichungstag der Anmeldung: 10.03.2021
(73) Patentinhaber: CUBES GmbH, 5020 Salzburg (AT)
(72) Erfinder: MEINDL, Edwin, 9782 Nikolsdorf (AT); WAGNER, Karl, 5020 Salzburg (AT); FALCH, Christian, 6465 Nassereith (AT)
(74) Vertreter: Dilg, Haeusler, Schindelmann Patentanwaltsgesellschaft mbH
(86) Internationale Anmeldenummer: PCT/EP2020/070195
(87) Internationale Veröffentlichungsnummer: WO 2021/009308

(56) Entgegenhaltungen:
- EP-A1- 2 108 401
- FR-E- 59 707
- JP-A- 2007 245 515
- US-A- 5 546 313
- US-A1- 2017 225 369

## Beschreibung

### Technisches Gebiet

Die vorliegende Erfindung betrifft ein System und ein Verfahren zum flexiblen Ausbilden einer Gussform zum Herstellen eines Gussmodells. Ferner betrifft die vorliegende Erfindung ein System zum Herstellen eines Formkörpers.

### Hintergrund der Erfindung

In der heutigen Produktentwicklung sind die Anforderungen an den Prototypenbau, schnell und flexibel Prototypen herzustellen. Hierfür werden keine festen und einmalig hergestellten Gussformen ausgebildet, sondern es werden anpassbare Gussformen eingesetzt, sodass sich diese für die Herstellung von unterschiedlichen Prototypen anpassen lassen.

DE 203 20 712 U1 beschreibt beispielsweise ein anpassbares Formwerkzeug zur Herstellung von beliebig geformten flächigen Bauteilen. Das Formwerkzeug ist auf eine Flächenkontur einstellbar, die einer Flächenkontur des Bauteiles entspricht, wobei die Flächenkontur des Formwerkzeuges durch eine Matrix aus einzelnen Segmentstempeln gebildet ist. Die Segmentstempel können einzelnen gesteuert und vertikal verschoben werden. An einer vorbestimmten Position werden die Segmentstempel in ihrer vertikalen Lage fixiert.

US 2017/225369 A1 offenbart eine einstellbare Gießvorrichtung bzw. Formwerkzeug. Stäbe werden durch Öffnungen einer Kammer in diese eingefahren und fixiert, so dass ein Innenvolumen der Kammer definiert wird.

Eine Gußmasse wird in die Kammer eingefüllt und ausgehärtet. Anschließend können die Stäbe und das gehärtete Bauteil entnommen werden.

FR 59 707 E offenbart eine Gußform mit einem formangepassten und eine Seite der Gußform bildenden Stempels. Der Stempel kann aus mehreren Stäben bestehen, welche die Gußform bilden.

JP 2007 245515 A offenbart eine Gußform für Kunstharzmaterial um Kunststofflinsen herzustellen. Eine Hälfte der Gußform kann aus einem Stapel and unterschiedlich angeordneten Stäben gebildet werden, wobei die Anordnung der Stäbe eine spezifische Form der Linse vorgeben.

EP 2 108 401 offenbart eine Vorrichtung zum Herstellen eines Kompensationselements für den Einsatz in der Strahlentherapie, wobei das Kompensationselement an gewisse Strahlungseigenschaften und Formen bzw. Konturen angepasst werden kann. Dabei wird eine Form aus einer Vielzahl von parallelen vertikalen Metallstäben gebildet. Mittels Bewegungsmittel, wie beispielsweise einem Roboterarm, können die einzelnen Stäbe vertikal verschoben werden. Der Roboterarm kann dabei Stahlnadeln aufweisen, die die entsprechenden Stäbe vertikal verschieben können. Die so eingestellte Form bestehend aus den einzelnen Stäben wird dann erhitzt bis zu einem Schmelzpunkt, sodass eine Form entsteht. Diese Form wird dann in ein Kunststoffsubstrat gedrückt, um eine entsprechende Oberflächenform zu bilden.

Bei Systemen zum Herstellen von Prototypen ist einerseits ein einfacher Systemaufbau gewünscht, welcher sich schnell an unterschiedlich geformte Prototypen anpassen lässt.

### Darstellung der Erfindung

Es ist eine Aufgabe der vorliegenden Erfindung, ein System zum Herstellen von Prototypen mit einem einfachen Systemaufbau zu schaffen, welcher sich schnell an unterschiedlich geformte Prototypen bzw. Gussmodelle anpassen lässt.

Diese Aufgabe wird mit einem System und einem Verfahren zum flexiblen Ausbilden einer Gussform und zum Herstellen eines Gussmodells gemäß den unabhängigen Ansprüchen gelöst, insbesondere indem eine Fördereinrichtung ausgebildet ist Formstäbe zu greifen und auf einer Montageplattform derart abzulegen, dass ein Stapel der Formstäbe ausbildbar ist und dass eine Seite des Stapels mittels der Position der Formstäbe ausbildbar ist, um zumindest eine Seite einer Gussform durch den Stapel von Formstäbe auszubilden.

Gemäß einem ersten Aspekt der vorliegenden Erfindung wird ein System zum flexiblen Ausbilden einer Gussform und zum Herstellen eines Gussmodells beschrieben. Das System weist eine Montageplattform, eine Vielzahl von Formstäben zum Ausbilden der Gussform und eine Fördereinrichtung zum Fördern der Formstäbe zu der Montageplattform entlang einer Förderrichtung auf. Die Fördereinrichtung ist ausgebildet die Formstäbe (einzeln oder mehrere in Gruppen) zu greifen und auf der Montageplattform derart abzulegen, dass ein Stapel der Formstäbe ausbildbar ist und dass eine Seite des Stapels mittels der Position der Formstäbe ausbildbar ist, um einen Bereich der Gussform zu bilden.

Gemäß eines weiteren Aspekts wird ein Verfahren zum flexiblen Ausbilden einer Gussform und zum Herstellen eines Gussmodells. Gemäß dem Verfahren wird zumindest ein Formstabs zu einer Montageplattform entlang einer Förderrichtung verfahren, wobei die Fördereinrichtung ausgebildet ist die Formstäbe zu greifen und auf der Montageplattform derart abzulegen, dass ein Stapel der Formstäbe ausbildbar ist und dass eine Seite des Stapels mittels der Position der Formstäbe ausbildbar ist, um einen Bereich der Gussform zu bilden.

Das Gussmodel ist ein dreidimensionales Objekt, zum Beispiel ein Werkzeug-, Form- oder Modellblock, welches zum Herstellen eines Prototyps geeignet ist. Bei dem Gussmodel handelte es sich insbesondere um ein gegossenes Bauteil, welches zum Beispiel aus Kunststoff, wie beispielsweise Polyurethan (PU) Kunstharz oder Ureol, oder aus metallischen Werkstoffen, wie beispielsweise Aluminium, gegossen werden kann. Das Gussmodell kann beispielsweise zwischen 2000 mm (Millimeter) und 4000 mm, insbesondere 3000 mm lang sein, 1000 mm bis 2000mm, insbesondere 1500 mm, bereit sein und 1000mm bis 3000mm, insbesondere 2000 mm hoch sein.

Nach dem Gießen des Gussmodells in dem erfindungsgemäßen System, kann dieses in weiteren Fertigungseinrichtungen, wie beispielsweise einem Ofen oder einer Oberflächenbehandlungseinrichtung (Schleifenmaschinen etc.) weiterverarbeitet werden.

Die Formstäbe können beispielsweise aus einem metallischen Material, wie beispielsweise Stahl oder Aluminium, oder aus einem Kunststoff, wie beispielsweise Polyethylen (PE) hergestellt werden. Die Formstäbe weisen einen stapelbaren Querschnitt, zum Beispiel einen rechteckigen Querschnitt, auf. Ferner weisen die Formstäbe jeweils zwei gegenüberliegende Stirnflächen auf. Zum Beispiel bildet ein Endbereich eines Formstabs mit seiner Stirnfläche und seiner Oberfläche einen Bereich der Gussform aus. Die Form der Gussform wird gebildet, indem die einzelnen Formstäbe mehr oder weniger in die Gussform (insbesondere horizontal) hineinragen. Dabei bilden die Bereiche der Formstäbe, welche aus dem Stapel in den Bereich der Gussform hineinragen und nach innen versetzt sind die entsprechenden Negativformen des Gussmodells bzw. die entsprechenden Konturen der Gussform aus. Die Formstäbe können identische geometrische Abmessungen zueinander aufweisen. Alternativ können Gruppen von Formstäben eine unterschiedliche Länge, einen unterschiedlichen Querschnitt oder unterschiedlich geformte Stirnflächen oder Staboberflächen, beispielsweise gewölbte und planare Stirnflächen oder Staboberflächen, aufweisen.

Die Formstäbe beispielsweise eine Abmessung von B x H x L = 50 x50x 1500 mm aufweisen beispielsweise zwischen 3 und 4 Kg/Stück wiegen. Die Formstäbe können geordnet in Stabmagazinen vorliegen. Beispielsweise können auf einem Stabmagazin 5500 bis 6000 Formstäbe lagern.

Ein Stapel kann beispielsweise 2500 bis 3000 Formstäbe aufweisen, um eine Seite der Gussform auszubilden.

Eine Seite einer Gussform wird durch einen Stapel von Formstäben gebildet. Die einzelnen Formstäbe eines Stapels ragen mehr oder weniger mit ihren Stirnflächen bzw. Endbereichen in die Gussform hinein und bilden somit einen gewünschten Formbereich der Gussform und entsprechend einen Formbereich des Gussmodells.

Die Montageplattform bildet eine auf einem Boden definierte Auflagefläche für einen Stapel der Formstäbe. Die Montageplattform besteht aus einem festen Untergrund, wie beispielsweise aus einem metallischen Material, wie beispielsweise Stahlplatten. Auf der Montageplattform werden mittels der Fördereinrichtung die einzelnen Formstäbe platziert. Entsprechend bildet sich auf der Montageplattform ebenfalls die Gussform aus. Die Montageplattform kann auch als vorbestimmter Bereich eines Bodens angesehen werden, sodass die Formstäbe beispielsweise direkt auf dem Boden gestapelt werden können.

Die Fördereinrichtung ist ausgebildet, die Formstäbe einzeln zu greifen. Hierfür kann die Fördereinrichtung, wie nachfolgend detaillierter beschrieben, die Formstäbe greifen, ansaugen oder magnetisch fixieren, und diese vertikal anheben und entsprechend horizontal zwischen einer Lagerposition (beispielsweise dem unten beschriebenen Stabmagazin) und dem Montagebereich auf der Montageplattform fördern. Die Fördereinrichtung fördert die Formstäbe insbesondere entlang einer Förderrichtung, welche insbesondere horizontal verläuft.

Die Formstäbe eines Stapels können in einer beispielhaften Ausführungsform nach dem Platzieren mittels der Fördereinrichtung in eine gewünschte Form, beispielsweise manuell oder mittels einer Justiervorrichtung, im Stapel verschoben werden, um die gewünschte Position der Formstäbe im Stapel und entsprechend die Form der Gussform vorzugeben.

In einer weiteren beispielhaften Ausführungsform kann die Fördereinrichtung insbesondere durch eine Steuereinrichtung derart gesteuert werden, dass jeder Formstab an einer definierten und vorgegebenen Position in dem Stapel und entsprechend auf dem Montagebereich platziert werden kann. Mit anderen Worten ist die Fördereinrichtung ausgebildet die Formstäbe insbesondere lose (d. h. ohne formschlüssige Verbindung oder Klebeverbindung zwischen den Formstäben untereinander) an vorgegebenen Positionen im Stapel abzulegen. Dabei kann der Stapel an Formstäben derart gebildet werden, indem die Fördereinrichtung zunächst die Formstäbe in einer ersten Ebene exakt relativ zueinander platziert und anschließend auf der ersten Ebene eine zweite Ebene von Formstäben ausbildet. Somit kann der Stapel Ebene für Ebene vertikal aufgebaut werden, bis schließlich eine gesamte Seite des Stapels durch die Formstäbe gebildet wird und somit entsprechend ein Bereich der Gussform. Entsprechend kann in einer weiteren beispielhaften Ausführungsform der Stapel aus nebeneinander und übereinander gelegten, insbesondere parallelen, Formstäben ausbildbar sein, deren Position entlang einer Stabrichtung der Formstäbe individuell mittels der Fördereinrichtung einstellbar ist. Die Bereiche der Formstäbe, z. B. die Stirnflächen und Oberflächenbereiche der Formstäbe, welche die Gussform ausbilden, sind entlang einer Stabrichtung der Stäbe individuell mittels der Fördereinrichtung platzierbar. Mit anderen Worten kann die Fördereinrichtung z. B. als Portalanlage oder mit einem Roboterarm ausgebildet werden, um die Formstäbe auf der Montageplattform gemäß der vorgegebenen Raumparametern (X-Y-Z Parametern) abzulegen. Die Fördereinrichtung weist beispielsweise angetriebene Linearachsen auf, um die Stäbe untereinander entsprechend zu verfahren und an die Kontur des zugewiesenen Gussteils im Stapel anpassen zu können. Somit wird ebenenweise ein Stapel aufgebaut, um die Gussform zu bilden.

Gemäß einem weiteren Aspekt der vorliegenden Erfindung wird ein System zum Herstellen eines Formkörpers beschrieben. Das System weist eine Montageplattform, eine Vielzahl von Formstäben zum Ausbilden des Formkörpers und eine Fördereinrichtung zum Fördern der Formstäbe zu der Montageplattform auf. Die Fördereinrichtung ist ausgebildet die Formstäbe zu greifen und auf der Montageplattform derart abzulegen, dass ein Stapel der Formstäbe ausbildbar ist, wobei die Positionen der einzelnen Formstäbe im Stapel die Form des Formkörpers nachbilden. Die Formstäbe sind miteinander derart verklebbar, dass der Stapel den Formkörper ausbildet. Mit anderen Worten kann beispielsweise ebenfalls ein Stapel gebildet werden, welcher alternativ zur Vorgabe einer Gussform, selbst den herzustellenden Formkörper ausbildet. Hierfür werden die Formstäbe beispielsweise unlösbar miteinander verbunden, wie beispielsweise mittels Klebens. Ähnlich wie das Gussmodell, ist der Formkörper ein dreidimensionales Objekt, zum Beispiel ein Werkzeug-, Form- oder Modellblock. Bei dem Formkörper handelte es sich insbesondere um ein Bauteil, welches zum Beispiel aus Kunststoff, wie beispielsweise Polyurethan (PU) Kunstharz oder Ureol, oder aus metallischen Werkstoffen, wie beispielsweise Aluminium, entsprechend der Zusammensetzung des Materials der Formstäbe, hergestellt werden kann.

Mit der vorliegenden Erfindung kann in einfacher Art und Weise ein Stapel aus einer Vielzahl von Formstäbe gebildet, wobei der Stapel einen Bereich einer Gussform ausbildet oder selbst einen Formkörper ausbildet. Dies wird insbesondere dadurch erzielt, dass Formstäbe aufeinander in einem Stapel exakt platziert werden. Da die Formstäbe aufeinander platziert werden können und eine entsprechende geometrische Form aufweisen, die eine Stapelung zu lassen, sind komplexe Haltevorrichtungen der einzelnen Formstäbe unnötig. Da die erfindungsgemäße Fördereinrichtung die Formstäbe Schicht für Schicht aufbaut und entsprechend wieder abbauen kann, sind ferner keine komplexen Steuerungsmechanismen notwendig, um in einem Stapel selbst einzelne Stäbe zu verschieben. Die exakte Position der einzelnen Formstäbe wird bei ihrer Platzierung auf dem Stapel vorgegeben und muss später, beispielsweise bis zum Gießen des Gussmodells, nicht justiert werden. Somit ist ein robustes System zum flexiblen Ausbilden einer Gussform oder eines Formkörpers geschaffen, welches zudem schnell an verschiedenen zu gießende Gussmodelle bzw. herzustellenden Formkörper angepasst werden kann.

Gemäß einer weiteren beispielhaften Ausführungsform ist eine Oberfläche der Formstäbe, insbesondere die Stirnfläche zumindest eines Formstabs, planar, gewölbt oder abgewinkelt ausgebildet. Entsprechend können Gruppen von Formstäben eine unterschiedlich geformte Oberfläche und/oder Stirnfläche, beispielsweise gewölbte, abgewinkelte und planare Oberflächen bzw. Stirnflächen, aufweisen. Je nach Oberflächenform der zu gießenden Seite der Gussform kann sich die Fördereinrichtung aus einer der Gruppen von Formstäben bedienen und entsprechend auf dem Stapel einen Formstab mit einer gewünschten Form der Stirnfläche ablehnen.

Gemäß einer weiteren beispielhaften Ausführungsform weist das System ein Stabmagazin zum Lagern der Formstäbe auf, wobei die Fördereinrichtung eingerichtet ist, die Formstäbe einzeln zwischen dem Stabmagazin und der Montageplattform zu befördern. Das Stabmagazin kann eine Auflagefläche auf dem Boden für das Lagern der Formstäbe ausbilden. Auf dem Stabmagazin können lose die einzelnen Formstäbe lagern, welche für eine spätere Verwendung zum Bilden der Gussform vorgesehen sind und entsprechend von der Fördereinrichtung greifbar sind. Das Stabmagazin kann ebenfalls ein Regalsystem ausbilden, in welchen die Formstäbe einzeln oder in Gruppen aufbewahrt werden können. Das Stabmagazin und die Montageplattform können integral ausgebildet sein und beispielsweise eine gemeinsame Bodenplatte ausbilden.

Gemäß einer weiteren beispielhaften Ausführungsform ist das Stabmagazin entlang der Förderrichtung von dem Stabmagazin zu der Montageplattform hinter der Montageplattform angeordnet.

Gemäß einer weiteren beispielhaften Ausführungsform weist die Fördereinrichtung eine Greifeinheit zum Greifen eines Formstabs oder einer Mehrzahl von Formstäben auf. Die Greifeinheit kann beispielsweise zwei Klemmbacken aufweisen, welche einen Formstab zur Beförderung und Fixierung einklemmen. Alternativ kann Formstab beispielsweise eine Aufnahmeöffnung aufweisen, in welche die Greifeinheit eingreifen kann und den Formstab fixieren kann.

Gemäß einer weiteren beispielhaften Ausführungsform ist die Greifeinheit als Vakuum-Greifeinheit mit zumindest einer Vakuumsaugplatte derart ausgebildet, dass zur Stabfixierung die Vakuum Greifeinheit einen oder mehrere Formstäbe gleichzeitig zu befördernde Formstab ausschließlich an dessen (oberen) Oberfläche fixiert. Mittels Bildens eines Vakuums (bzw. Unterdrucks) zwischen der Vakuumsaugplatte und der oberen Oberfläche des Formstabs ist es möglich, dass zur Fixierung und Beförderung des Formstabs kein umschließen bzw. greifen des Formstabs notwendig ist. Somit können die Formstäbe in einem Stapel anliegend aneinander in einer Ebene platziert werden sodass eine dichte Packung an Formstäben hergestellt werden kann. Somit wird das Austreten einer Gussmasse durch Spalte zwischen zwei anliegenden Formstäbe reduziert bzw. verhindert.

Gemäß einer weiteren beispielhaften Ausführungsform ist die Greifeinheit als Magnet-Greifeinheit ausgebildet, dass zur Stabfixierung die Magnet-Greifeinheit zumindest einen zu befördernden Formstab, insbesondere ausschließlich, an dessen Oberfläche magnetisch fixiert. Die Magnet-Greifeinheit ist insbesondere mit einem Elektromagneten ausgebildet, sodass diese optional eine Magnetkraft aktivieren und deaktivieren kann. Die zu befördernden Formstäbe können beispielsweise aus magnetischen bzw. magnetisierbaren Material, wie beispielsweise einem ferromagnetischen Material (zum Beispiel Metall), bestehen. Alternativ können die Formstäbe aus Kunststoff bestehen, wobei magnetische Einsätze bestehend beispielsweise aus magnetischen bzw. magnetisierbaren Material, wie beispielsweise einem ferromagnetischen Material (zum Beispiel Metall), an dem Formstab befestigt bzw. eingelassen sind.

Gemäß einer weiteren beispielhaften Ausführungsform weist das System einen Führungsrahmen aus zumindest einer Führungsschiene auf. Der Führungsrahmen ist über der Montageplattform und beabstandet von dieser angeordnet, wobei die Fördereinrichtung an der Führungsschiene verfahrbar gekoppelt ist. Die Fördereinrichtung kann beispielsweise mittels eines Ketten- oder Riemenantriebs entlang der Führungsschienen verfahren werden. Der Führungsrahmen kann beispielsweise aus einer Führungsschiene bestehen, welche parallel zur Förderrichtung verläuft, und eine weitere Führungsschiene, welche orthogonal zur Förderrichtung verläuft. Somit kann die Fördereinrichtung jede Position einer Ebene des Stapels erreichen und entsprechend die Formstäbe ablegen oder anheben. Die Fördereinrichtung kann dabei insbesondere mittels pneumatischen, hydraulischen oder elektrischen Antrieben betrieben werden. Insbesondere können Linearmotoren eingesetzt werden, um die Fördereinrichtung exakt zu positionieren.

Gemäß einer weiteren beispielhaften Ausführungsform ist die Fördereinrichtung stationär eingerichtet ist und weist einen Roboterarm auf, wobei der Roboterarm ausgebildet ist, den zumindest einen Formstab zu greifen und auf der Montageplattform zum Bilden des Stapels abzulegen. Dabei kann der Roboterarm beispielsweise die oben beschriebene Arten von Greifeinheiten aufweisen, um die Formstäbe zu befestigen. Der Roboterarm kann beispielsweise fest am Boden fixiert werden und schwenkbar und translatorisch ausragend bewegt werden.

In einer weiteren beispielhaften Ausführungsform ist die Fördereinrichtung entsprechend eingerichtet, den Formstab zu rotieren. Unter Rotieren wird verstanden, dass ein Formstab eine Rotationsachse aufweist, welche parallel zu einer Normalen der horizontalen Ebene, bzw. parallel zur vertikalen Richtung, ist. Mit anderen Worten kann der Formstab in der Horizontalebene rotiert werden. Somit besteht die Möglichkeit, dass neben der ersten Zeit und der zweiten Seite der Gussform auch weitere Seiten der Gussform mittels der Fördereinrichtung gebildet werden können. Die Fördereinrichtung kann somit aus einem Stabmagazin einen Formstab entnehmen, in horizontal zu einer gewünschten Stapelposition befördern zu dem dessen Ausrichtung durch Rotation in der Horizontalebene einstellen.

Die Fördereinrichtung kann ferner ausgebildet sein, eine weitere Seite des Stapels, welche der oben genannten Seite des Stapels gegenüberliegt auszubilden. Dabei kann die Fördereinrichtung von einem gemeinsamen Stabmagazin zumindest einen Formstab entnehmen und diesen beispielsweise in Förderrichtung über die Gussform befördern und an der zweiten Seite ablegen. Ein Rotieren des Formstabs ist dabei nicht notwendig.

Gemäß einer weiteren beispielhaften Ausführungsform weist das System eine weitere Fördereinrichtung und ein weiteres Stabmagazin auf. Die weitere Fördereinrichtung ist eingerichtet, Formstäbe zu greifen und auf der Montageplattform derart abzulegen, dass ein weiterer Stapel der Formstäbe ausbildbar ist und dass eine Seite des weiteren Stapels mittels der Position der Formstäbe ausbildbar ist, um einen weiteren Bereich der Gussform zu bilden. Durch den Einsatz der mehreren Fördereinrichtungen können zügig mehrere Seiten einer entsprechenden Gussform hergestellt werden.

In einer weiteren beispielhaften Ausführungsform können ferner mehrere Fördereinrichtungen, beispielsweise vier Fördereinrichtung eingesetzt werden, sodass vier beabstandete Stapel bilden, in deren Mitte die Gussform gebildet werden kann. Jeder Stapel bildet dabei einen unterschiedlichen Bereich der Gussform. Dabei kann beispielsweise ein erstes Paar von Fördereinrichtung entlang der Förderrichtung die Formstäbe zwischen entsprechenden Stabmagazinen und seitenbildenden Stapeln transportieren und ein zweites Paar von Fördereinrichtung entlang einer Richtung, senkrecht zur Förderrichtung, die Formstäbe zwischen entsprechenden Stabmagazinen und seitenbildenden Stapeln transportieren.

Somit kann vollumfänglich eine gewünschte Form einer Gussform und entsprechend eines Gussmodells bereitgestellt werden. Zudem kann beispielsweise in der Montageplattform eine Stab-Haltevorrichtung vorgesehen werden, welche eine Vielzahl von Formstäben insbesondere vertikal hält und jeden einzelnen Formstab in einer vorbestimmten vertikalen Position justieren und fixieren kann. Die Formstäbe werden dabei derart ziert, dass sie sich im Wesentlichen entlang der Schwerkraftrichtung bzw. vertikal erstrecken. Somit kann ebenfalls die Montageplattform mittels der Stab-Haltevorrichtung eine gewünschte Kontur und Form eines Bodenbereichs der Gussform ausbilden und entsprechend eine gewünschte Bodenform des Gussmodells auszubilden.

Gemäß einer weiteren beispielhaften Ausführungsform weist das System eine Dichtwand auf, welche auf der Montageplattform derart anbringbar ist, dass eine weitere Seite der Gussform, welche frei von den Formstäben ist, abgedichtet ist. Die Dichtwand kann beispielsweise planar oder gewölbt ausgebildet sein. Neben einer separaten Dichtwand kann diese alternativ mittels Formstäbe eines Stapels gebildet werden. Beispielsweise können die äußersten Spalten von Formstäben eines Stapels in Richtung Gussform maximal ausgefahren werden, um somit eine entsprechende seitliche Dichtwand zu generieren. Eine weitere separate Dichtwand ist somit obsolet. Entsprechend kann beispielsweise eine untere Reihe und/oder eine obere Reihe von Formstäbe eines Stapels maximal ausgefahren werden, um entsprechend einen Bodenbereich oder einen Deckel der Gussform zu bilden.

Gemäß einer weiteren beispielhaften Ausführungsform weist das System eine Gießvorrichtung auf, welche eingerichtet ist, eine Formmasse in die Gussform einzubringen. Die Gießvorrichtung kann beispielsweise über der offenen Gussform platziert werden und das entsprechende Gussmaterial in die Gussform einfließen lassen. Dabei kann die Gießvorrichtung mit einem Reservoir des Gussmaterials gekoppelt sein. Nach dem Aufbau der Gussform wird diese mit flüssigen Gussmaterial, insbesondere Polyethylen, ausgegossen, welches beispielsweise vor Ort mit einer Mischanlage hergestellt und mittels der Gießvorrichtung gefördert wird.

Gemäß einer weiteren beispielhaften Ausführungsform weist die Montageplattform Transportanschlüsse auf, welche zum Koppeln mit einer Transporteinrichtung, wie beispielsweise einen Kran oder einem Gabelstapler, ausgebildet sind, um die Montageplattform, insbesondere mit dem Stapel, zu befördern. Somit kann beispielsweise die Montageplattform aufweisend den Stapel und das Gussmodel befördert werden. Alternativ kann beispielsweise an einem Rüstplatz Montageplattform mit den entsprechenden Stapeln bestückt werden und anschließend mittels der Transporteinrichtung zu einem Gießplatz befördert werden, an dem beispielsweise die Gießvorrichtung vorgesehen ist. Nach dem Gießen kann die Montageplattform ferner weiter zu einem Ofen transportiert werden, um das Gussmodell auszuhärten.

Entsprechend kann somit ein Herstellsystem gebildet werden, welches beispielsweise eine Vielzahl von oben beschrieben Systemen mit entsprechenden Montageplattform ein und Fördereinrichtung in aufweist, in welchen simultan die entsprechenden Montageplattformen mit Stapeln bestückt werden können, wobei anschließend die entsprechenden Montageplattform der externen Gießvorrichtung zugeführt werden. Insbesondere, da der Bestückvorgang der Stapel mehr Zeit in Anspruch nimmt als das Gießen, und somit effizient ein Herstellervorgang bereitgestellt werden.

Gemäß einer weiteren beispielhaften Ausführungsform weist das System eine Presseinrichtung auf, welche eingerichtet ist, z.B. entlang der Schwerkraftrichtung oder seitlich auf den Stapel und seitlich an den Stapel zu drücken, um ein Verschieben der Stäbe zu unterbinden. Die Presseinrichtung kann beispielsweise zusammen mit der Fördereinrichtung verfahren werden. Beispielsweise weist die Presseinrichtung einen Querbalken auf, welcher sich quer zur Förderrichtung erstreckt und von oben auf den Stapel drücken kann. Einerseits erhalten die Formstäbe aufgrund ihrer Schwerkraft den Stapel. Zusätzlich kann aufgrund des Drucks der Presseinrichtung die Position der Formstäbe in dem Stapel gefestigt werden.

Ferner weist das System eine weitere Presseinrichtung auf, welche entlang einer Horizontalrichtung, d. h. seitlich, zumindest eine Ebene von Formstäben eines Stapels in Horizontalrichtung verklemmt. Insbesondere kann somit jede vollständig gelegte Ebene verklemmt werden.

Dabei wird die Klemmung aller zuvor gelegten Ebenen kurz gelöst und wieder geklemmt. So wird ein sogenanntes Nachsitzen, d. h. ein Verspannen, der Formstäbe durch ihr Eigengewicht ermöglicht und Spalte aufgrund von Stabtoleranzen werden geschlossen.

Gemäß einer weiteren beispielhaften Ausführungsform weist die Montageplattform eine Montageplatte auf, welche an der Montageplattform lösbar befestigt ist, wobei die Montageplatte einen Boden der Gussform ausbildet. Das Gussmodel kann somit auf der Montageplatte gebildet und ausgehärtet werden. Anschließend kann das Gussmodel zusammen mit der Montageplatte aus der Montageplattform entnommen werden und zur weiteren Verarbeitung gefördert werden.

Gemäß einer weiteren beispielhaften Ausführungsform ist die Montageplatte senkrecht zu der Förderrichtung von der Montageplattform entnehmbar. Insbesondere kann die Montageplattform eine Öffnung mit zwei seitlichen Führungsschienen aufweisen, in welche die Montageplatte schubladenartig einschiebbar ist.

Gemäß einer weiteren beispielhaften Ausführungsform ist die Fördereinrichtung ausgebildet die Formstäbe einzeln oder eine Gruppe an Formstäben zu greifen und diese von dem Stapel zu entnehmen und insbesondere entgegen der Förderrichtung zu befördern. Somit kann nach dem Aushärten der Gussform jeder Formstab erneut mittels der Fördereinrichtung in das Stabmagazin befördert werden und für eine anschließende Gussform wiederverwendet werden.

Gemäß einer weiteren beispielhaften Ausführungsform weist die Fördereinrichtung ein Koppelelement auf, welches in eine Aufnahmeöffnung eines Formstabes derart eingreift, dass eine Entformungskraft insbesondere entgegen der Förderrichtung auf den Formstab übertragbar ist. Die Entformungskraft ist insbesondere antiparallel zu der Förderrichtung. Nach dem Aushärten des Gussmaterials können die Formstäbe an dem Gussmodell anheften, sodass eine entsprechende Entformungskraft (beispielsweise 2000 N bis 5000 N) notwendig ist, um einen Formstab von dem Gussmodel zu lösen. Durch Adhäsion, Schrumpfung und andere Einflüsse kleben die Formstäbe am Gussmodel. Formstäbe aus Polyethylen lassen sich gut vom Gussmodell entformen bzw. entnehmen. Insbesondere kann eine Zugkraft entgegen der Förderrichtung, d. h. entlang einer Entformungsrichtung, von 200 kg bis 400 oder 600 kg Zugkraft aufgebracht werden.

Die Entformungskraft wird insbesondere von der Fördereinrichtung eingeleitet, wobei in einer bevorzugten Ausführungsform jeweils ein einzelner Formstab einzeln entformt wird, während sich die anderen Formstäbe am Gussmodel abstützen und so eine ungewollte Kraftübertragung auf das System verhindern.

Gemäß einer weiteren beispielhaften Ausführungsform weist die Aufnahmeöffnung ein Innengewinde, insbesondere einen Gewindeeinsatz, auf und das Koppelelement ist als Gewindestift ausgebildet. Somit kann zudem eine Hebekraft, d. h. eine vertikale Kraft, zwischen der Fördereinrichtung und dem Formstab übertragen werden, sodass ebenfalls ein Anheben des Formstabs möglich ist.

Gemäß einer weiteren beispielhaften Ausführungsform ist das Koppelelement als Bolzen zum Ausbilden eines Formschlusses mit der Aufnahmeöffnung ausgebildet, um die Entformungskraft zu übertragen.

Die Aufnahmeöffnung weist entsprechend eine Vertiefungsrichtung in den Formstab auf, welche senkrecht zu der Förderrichtung ausgebildet ist. Somit kann ein Bolzen als Koppelelement in die Aufnahmeöffnung eingreifen und einen Formschluss bilden, sodass eine horizontale Kraft (Zugkraft bzw. Entformungskraft) aufgebracht werden kann.

Gemäß einer weiteren beispielhaften Ausführungsform ist die Aufnahmeöffnung mit einem Hinterschnitt ausgebildet und der Bolzen ist zum Koppeln in der Aufnahmeöffnung ausgebildet, wobei der Bolzen insbesondere als Kugelsperrbolzen ausgebildet ist. Der Bolzen und/oder das Material des Formstab, in welchem der Hinterschnitt ausgebildet ist, sind beispielsweise elastisch ausgebildet, so dass bei Eindrücken des Bolzens in die Aufnahmeöffnung ein Koppelbereich des Bolzens (beispielsweise Kugel des Kugelsperrbolzens) sich mit dem Hinterschnitt verhakt, sodass eine stabile Verbindung zwischen dem Bolzen und dem Formstab hergestellt wird.

Gemäß einer weiteren beispielhaften Ausführungsform weist zumindest einer der Formstäbe auf seiner Oberfläche die Aufnahmeöffnung auf, sodass das Koppelelement senkrecht (insbesondere vertikal) zur Fördereinrichtung in die Aufnahmeöffnung einkoppelbar ist.

Gemäß einer weiteren beispielhaften Ausführungsform weist zumindest einer der Formstäbe eine weitere Stirnfläche auf, welche der Stirnfläche gegenüberliegt, wobei in der weiteren Stirnfläche die Aufnahmeöffnung ausgebildet ist.

Gemäß einer weiteren beispielhaften Ausführungsform weist die Fördereinrichtung ein weiteres Koppelelement auf, welches ausgebildet ist, in eine Aufnahmeöffnung eines weiteren Formstabes derart einzugreifen, dass eine Entformungskraft insbesondere entgegen der Förderrichtung auf einen weiteren Formstab übertragbar ist. Entsprechend kann die Fördereinrichtung eine Vielzahl von Formstäben greifen bzw. mit einer Vielzahl von Formstäben gekoppelt werden, um in Entformungsrichtung eine Vielzahl von Formstäben gleichzeitig von den gegossenen Gussmodel und von dem Stapel zu lösen.

Gemäß einer weiteren beispielhaften Ausführungsform sind das Koppelelement und das weitere Koppelement unabhängig voneinander entlang der Förderrichtung verfahrbar, um selektiv eine Entformungskraft entlang einer Entformungsrichtung (welche entgegen der Förderrichtung ausgebildet ist) auf den Formstab oder den weiteren Formstab aufzubringen. Somit kann beispielsweise eine Kopplung mit zwei oder mehreren Formstäben ermöglicht werden, wobei nur ein Teil der Formstäbe mittels eines Koppelelements entlang der Entformungsrichtung gelöst wird. Aufgrund der Kopplung der anderen Koppelelemente mit den Formstäben wird eine Haltekraft der Fördereinrichtung an dem verbliebenen Stapel bereitgestellt, sodass entlang der Entformungsrichtung ein Stab gelöst werden kann und die Gegenkräfte von der Fördereinrichtung auf den Stapel übertragen werden können. Dadurch wird beispielsweise der Führungsrahmen, an welchem die Fördereinrichtung befestigt ist, entlastet, da der Kraftfluss durch den Stapel und nicht durch den Führungsrahmen verläuft.

Gemäß einer weiteren beispielhaften Ausführungsform weist das System ferner eine Reinigungseinrichtung zum Reinigen zumindest der Stirnflächen der Formstäbe auf. Die Reinigungseinrichtung weist eine Reinigungsöffnung auf, durch welche ein zu reinigender Stab entlang der Förderrichtung einschiebbar ist. Nach dem Entfernen werden die Stäbe somit von der Fördereinrichtung zur der Reinigungsvorrichtung ohne Zwischenlagerung gefördert und mittels Ein- und Ausführens der Formstäbe in die Reinigungsvorrichtung gesäubert. Anschließend werden die Formstäbe an dem Stabmagazin abgelegt.

Die Reinigungseinrichtung ist beispielsweise oberhalb der Montageplattform, beispielsweise an dem Führungsrahmen befestigt. Insbesondere kann die Reinigungseinrichtung oberhalb und neben der Montageplattform angeordnet sein, sodass das Befördern der Formstäbe zur Gussform nicht behindert wird. Die Reinigungseinrichtung weist Reinigungselemente auf, welche beispielsweise ausgehärtete Formmasse mechanisch löst. Dabei können die Reinigungselemente entsprechende raue Oberfläche aufweisen, um die ausgehärtet Formmasse abzuschleifen. Ferner können die Reinigungselemente die unten beschriebenen Spachtelelemente aufweisen, um ausgehärtet Formmasse von einem Formstab abzukratzen. Zudem kann die Reinigungseinrichtung beispielsweise eine Sprüheinrichtung zum Aufbringen eines chemischen Reinigungsmittels aufweisen.

Die Reinigungseinrichtung weist zumindest eine Öffnung auf, welche derart eingerichtet ist, dass ein Formstab parallel zur Förderrichtung eingefahrenen und ausgefahren werden kann. Somit kann die Fördereinrichtung nach dem Entfernen eines Formstabs von dem Stapel zunächst den Formstab in die Reinigungseinrichtung einbringen und anschließend den gereinigten Formstab den Stabmagazin ablegen. Somit kann der Reinigungsvorgang der Formstäbe in das System integriert werden und eine Wiederverwendbarkeit der Formstäbe ohne weitere Aufbereitungsschritte ermöglichen.

Gemäß einer weiteren beispielhaften Ausführungsform weist die Reinigungseinrichtung ein Spachtelelement aufweist, welches derart eingerichtet ist, dass bei Verfahren bzw. Bewegen des Formstabs in der Reinigungseinrichtung das Spachtelelement entlang einer Oberfläche und der Stirnfläche des Formstabs kratzt. Somit kann ausgehärtete Formmasse des Materials abgekratzt werden und somit der Formstab gereinigt werden. Die Spachtelelemente können elastisch vorgespannt werden, beispielsweise mit Federelementen, wobei durch Einfahren eines Formstabs die Spachtelelemente auf den Stirnflächen und der Oberfläche des Formstabs entlang kratzen und gleichzeitig die Spachtelelemente wegdrücken. Somit kann eine umfassende Reinigung der Formstäbe garantiert werden.

Gemäß einer weiteren beispielhaften Ausführungsform weist das System eine Steuereinrichtung zum Steuern der Fördereinrichtung auf. Die Steuereinrichtung ist konfiguriert, basierend auf Modelldaten des herzustellenden Gussmodells die Positionsdaten der einzelnen Formstäbe zum Bilden der Gussform zu bestimmen.

Unter der Steuereinrichtung wird insbesondere eine Einrichtung mit Prozessorressource verstanden, die zum - insbesondere programmtechnischen - Verarbeiten der bereitgestellten Daten der Gussform bzw. des Gussmodells konfiguriert ist und die ferner zum Steuern der Fördereinrichtung konfiguriert ist. Während dieser Verarbeitung kann die Prozessorressource mit einer Datenspeicherressource der Steuereinrichtung unidirektional oder vorzugsweise bidirektional kommunizierfähig gekoppelt sein, um von dort Daten einzulesen und/oder auf diesem Daten zu speichern. Die Steuereinheit kann zum Beispiel als ein Computer bzw. Prozessor oder als Mehrzahl von zusammenwirkenden Computern oder Prozessoren (die räumlich beieinander liegen oder voneinander räumlich getrennt sein können) ausgebildet sein. Beispielsweise kann die Steuereinrichtung drahtgebunden oder drahtlos, beispielsweise über das Internet, mit einer Gussmodell-Datenbank verbunden sein, um entsprechende Daten auszutauschen. Insbesondere können die Gussmodel-Daten von einem CAD-Tool bezogen werden.

Die Steuereinheit ist konfiguriert, basierend auf dem Gussformmodel maschinenlesbare Befehle zu generieren, um damit die Fördereinrichtung zu steuern.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine schematische Darstellung einer Seitenansicht eines Systems gemäß einer beispielhaften Ausführungsform der vorliegenden Erfindung.
Fig. 2 eine schematische Darstellung einer Seitenansicht eines Systems aufweisend zwei Fördereinrichtungen gemäß einer beispielhaften Ausführungsform der vorliegenden Erfindung.
Fig. 3 eine perspektivische Darstellung eines Systems aufweisend zwei Fördereinrichtungen, wobei eine Gussform mit Formstäben gebildet ist, gemäß einer beispielhaften Ausführungsform der vorliegenden Erfindung.
Fig. 4 eine perspektivische Darstellung eines Systems aufweisend zwei Fördereinrichtungen, wobei die Formstäbe auf Stabmagazinen gelagert sind, gemäß einer beispielhaften Ausführungsform der vorliegenden Erfindung.
Fig. 5 und 6 Draufsichten eines Systems, in welchen ein Entladevorgang eines Modells dargestellt wird, gemäß einer beispielhaften Ausführungsform der vorliegenden Erfindung.
Fig. 7 eine Seitenansicht eines Systems, wobei ein Formstab in einer Reinigungseinrichtung vorliegt, gemäß einer beispielhaften Ausführungsform der vorliegenden Erfindung.
Fig. 8 bis 12 perspektivische Darstellungen von Formstäben mit Aufnahmeöffnungen für Koppelelement gemäß beispielhaften Ausführungsformen der vorliegenden Erfindung.
Fig. 13 eine perspektivische Darstellung einer Fördereinrichtung gemäß einer beispielhaften Ausführungsform der vorliegenden Erfindung.
Fig. 14 eine Seitenansicht einer Fördereinrichtung wie in Fig. 13 dargestellt.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

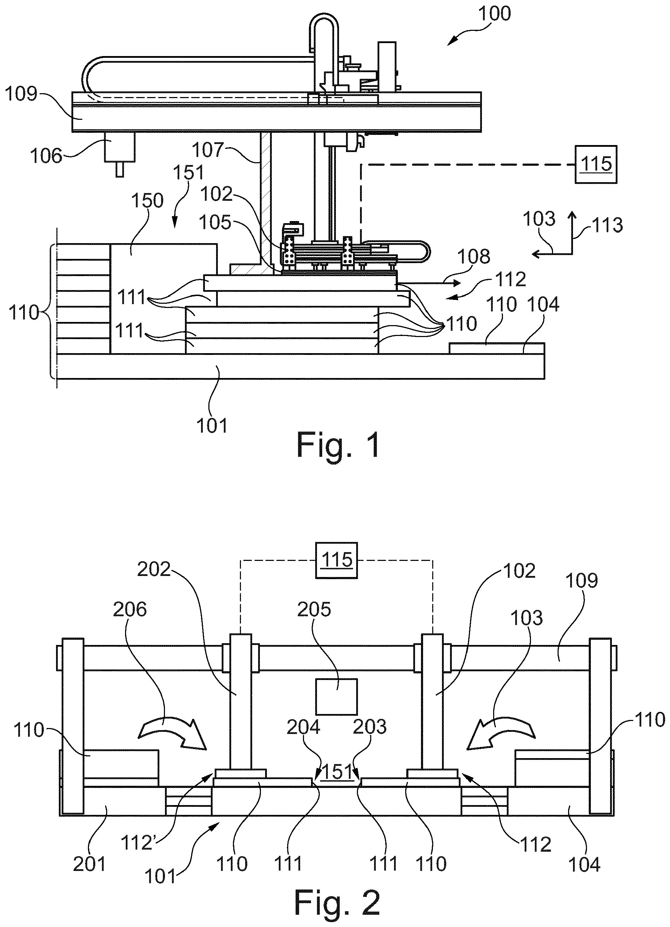

**Fig. 1** zeigt eine Seitenansicht eines Systems 100 zum flexiblen Ausbilden einer Gussform 151 und zum Herstellen eines Gussmodells gemäß einer beispielhaften Ausführungsform der vorliegenden Erfindung. Das System 100 weist eine Montageplattform 101, eine Vielzahl von Formstäben 110 zum Ausbilden der Gussform 151 und eine Fördereinrichtung 102 zum Fördern der Formstäbe 110 zu der Montageplattform 101 entlang einer Förderrichtung 103 auf. Die Fördereinrichtung 102 ist ausgebildet die Formstäbe 110 einzeln oder mehrere Formstäbe 110 in Gruppen zu greifen und diese insbesondere lose an vorgegebenen Positionen der Montageplattform 101 derart abzulegen, dass ein Stapel 112 der Formstäbe 110 ausbildbar ist und dass eine Seite 203 des Stapels 112 mittels der Position der Formstäbe 110 ausbildbar ist, um einen Bereich der Gussform zu bilden.

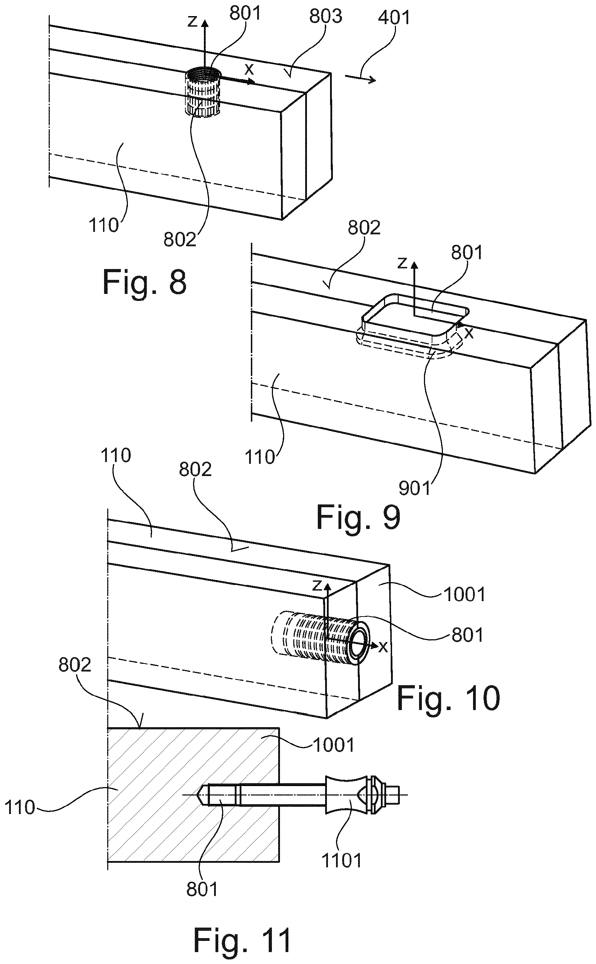

Die Formstäbe 110 weisen einen stapelbaren Querschnitt, zum Beispiel einen rechteckigen Querschnitt, auf. Ferner weisen die Formstäbe 110 jeweils zwei gegenüberliegende Stirnflächen 111, 1001 (siehe Fig. 10) auf. Der in den Gießbereich hineinragende Bereich eines Formstabs 110, welche z.B. einen Endbereich mit einer Stirnfläche 111 aufweist, bildet einen Bereich der Gussform 151 aus. Die Form der Gussform 151 wird gebildet, indem die einzelnen Formstäbe 110 mehr oder weniger in die Gussform (insbesondere horizontal entlang der Förderrichtung 103) hineinragen. Die Formstäbe 110 können identische geometrische Abmessungen zueinander aufweisen.

Zumindest ein Bereich der Gussform 151 wird durch einen Stapel 112 von Formstäben 110 gebildet. Die einzelnen Formstäbe 110 eines Stapels 112 ragen mehr oder weniger mit ihren Endbereichen aufweisend die Stirnflächen 111 in die Gussform 151 und bilden somit einen gewünschte Seitenbereich der Gussform 151 und entsprechend einen Seitenbereich des Gussmodells 150.

Die Montageplattform 101 bildet eine auf einem Boden definierte Auflagefläche für einen Stapel 112 der Formstäbe 110. Die Montageplattform 101 besteht aus einem festen Untergrund, wie beispielsweise Stahlplatten. Auf der Montageplattform 101 werden mittels der Fördereinrichtung 102 die einzelnen Formstäbe 110 platziert. Entsprechend bildet sich auf der Montageplattform 101 ebenfalls die Gussform 151 aus.

Die Fördereinrichtung 102 ist ausgebildet, die Formstäbe 110 einzeln zu greifen. Hierfür kann die Fördereinrichtung 102, wie nachfolgend detaillierter beschrieben, die Formstäbe 110 greifen oder ansaugen und diese vertikal anheben und entsprechend horizontal zwischen einer Lagerposition (beispielsweise einem Stabmagazin 104) und dem Montagebereich auf der Montageplattform 101 fördern. Die Fördereinrichtung 102 fördert die Formstäbe 110 insbesondere entlang der Förderrichtung 103, welche insbesondere horizontal verläuft. Die Fördereinrichtung 102 kann insbesondere durch eine Steuereinrichtung 115 derart gesteuert werden, dass jeder Formstab 110 an einer definierten Position auf dem Montagebereich platziert werden kann. Dabei kann der Stapel 112 an Formstäben 110 derart gebildet werden, indem die Fördereinrichtung 102 zunächst die Formstäbe 110 in einer ersten (Horizontal-)Ebene exakt relativ zueinander platziert und anschließend auf der ersten Ebene eine zweite Ebene von Formstäben 110 ausbildet. Somit kann der Stapel 112 Ebene für Ebene vertikal aufgebaut werden, bis schließlich ein gesamter Bereich der Gussform 151 durch die Formstäbe 110 des Stapels 112 gebildet werden. Entsprechend kann der Stapel 112 aus nebeneinander und übereinander gelegten, insbesondere parallelen, Formstäben 110 ausgebildet werden, deren Stirnflächen 111, welche die Gussform 151 ausbilden, entlang einer Stabrichtung der Stäbe 110 individuell mittels der Fördereinrichtung 102 platzierbar sind.

Ferner weist das System 100 ein Stabmagazin 104 zum Lagern der Formstäbe 110 außerhalb des Montagebereichs auf, wobei die Fördereinrichtung 102 eingerichtet ist, die Formstäbe 110 einzeln zwischen dem Stabmagazin 104 und der Montageplattform 101 zu befördern. Das Stabmagazin 104 kann eine Auflagefläche auf dem Boden für das Lagern der Formstäbe 110 ausbilden. Auf dem Stabmagazin 104 können lose die einzelnen Formstäbe 110 lagern, welche für eine spätere Verwendung zum Bilden der Gussform 151 vorgesehen sind und entsprechend von der Fördereinrichtung 102 greifbar sind. Das Stabmagazin 104 und die Montageplattform 101 können integral ausgebildet sein und beispielsweise eine gemeinsame Bodenplatte ausbilden.

In dem gezeigten Ausführungsbeispiel ist das Stabmagazin 104 entlang der Förderrichtung 103 hinter der Montageplattform 101 angeordnet.

Die Greifeinheit der Fördereinrichtung 102 ist in der gezeigten beispielhaften Ausführungsform als Vakuum-Greifeinheit mit zumindest einer Vakuumsaugplatte 105 derart ausgebildet, dass zur Stabfixierung die Vakuum Greifeinheit einen zu befördernde Formstab 110 ausschließlich an dessen (oberen) Oberfläche 803 (siehe Fig. 8) fixiert. Mittels Bildens eines Vakuums (bzw. Unterdrucks) zwischen der Vakuumsaugplatte 105 und der oberen Oberfläche 803 des Formstabs 110 ist es möglich, dass zur Fixierung und Beförderung des Formstabs 110 kein Umschließen bzw. Greifen des Formstabs 110 notwendig ist. Somit können die Formstäbe 110 in einem Stapel 112 anliegend aneinander in einer Ebene platziert werden, sodass eine dichte Packung an Formstäben 110 hergestellt werden kann.

Das System 100 weist einen Führungsrahmen 109 bestehend aus zumindest einer Führungsschiene auf. Der Führungsrahmen 109 ist über der Montageplattform 101 und beabstandet von dieser angeordnet, wobei die Fördereinrichtung 102 an der Führungsschiene verfahrbar gekoppelt ist. Die Fördereinrichtung 102 kann beispielsweise mittels eines Ketten- oder Riemenantriebs entlang der Führungsschienen verfahren werden.

Das System 100 weist ferner eine Gießvorrichtung 106 auf, welche eingerichtet ist, eine Formmasse in die Gussform 151 einzubringen. Die Gießvorrichtung 106 kann beispielsweise über der offenen Gussform 151 platziert werden und das entsprechende Gussmaterial in die Gussform 151 einfließen lassen.

Ferner weist das System 100 eine Presseinrichtung 107 auf, welche eingerichtet ist, entlang der Schwerkraftrichtung auf den Stapel 112 zu drücken, um ein Verschieben der Formstäbe 110 zu unterbinden. Die Presseinrichtung 107 kann beispielsweise zusammen mit der Fördereinrichtung 102 verfahren werden. Beispielsweise weist die Presseinrichtung 107 einen Querbalken auf, welcher sich quer zur Förderrichtung 103 erstreckt und von oben auf den Stapel 112 drücken kann. Einerseits erhalten die Formstäbe 110 aufgrund ihrer Schwerkraft den Stapel 112. Zusätzlich kann aufgrund des Drucks der Presseinrichtung 107 die Position der Formstäbe 110 in dem Stapel 112 gefestigt werden. Ferner kann eine weitere Presseinrichtung vorgesehen werden, welche entlang einer Horizontalrichtung, d. h. seitlich, zumindest eine Ebene von Formstäben 110 eines Stapels 112 in Horizontalrichtung verklemmt. Insbesondere kann somit jede vollständig gelegte Ebene verklemmt werden.

Ferner ist die Fördereinrichtung 102 ausgebildet die Formstäbe 110 einzeln zu greifen und diese von dem Stapel 112 zu entnehmen und insbesondere entgegen der Förderrichtung 103 zu befördern. Somit kann nach dem Aushärten der Gussform 151 jeder Formstab 110 erneut mittels der Fördereinrichtung 102 in das Stabmagazin 104 befördert werden und für eine anschließende Gussform wiederverwendet werden.

Die Fördereinrichtung 102 kann ein Koppelelement (zum Beispiel Bolzen oder Stift) aufweisen, welches in eine Aufnahmeöffnung 801 (siehe Fig. 8) eines Formstabes 110 derart eingreift, dass eine Entformungskraft 108 beispielsweise in Höhe von 5000 Newton entgegen der Förderrichtung 103 auf den Formstab 110 übertragbar ist. Die Entformungskraft 108 ist insbesondere antiparallel zu der Förderrichtung 103. Nach dem Aushärten des Gussmaterials können die Formstäbe 110 an dem Gussmodell 150 anheften, sodass eine entsprechende Entformungskraft 108 notwendig ist, um einen Formstab 110 von dem Gussmodel 150 zu lösen. Beispiele für entsprechende Aufnahmeöffnungen 801 und Koppelelementen werden in den Ausführungsbeispielen aus Fig. 8 bis Fig. 12 dargestellt.

Eine Steuereinrichtung 115 ist konfiguriert zum Steuern der Fördereinrichtung 102. Die Steuereinrichtung ist konfiguriert, basierend auf Modelldaten des herzustellenden Gussmodells 150 die Positionsdaten der einzelnen Formstäbe 110 zum Bilden der Gussform 151 zu bestimmen. Die Steuereinrichtung 115 ist konfiguriert, basierend auf dem Gussformmodell 150 maschinenlesbare Befehle zu generieren, um damit die Fördereinrichtung 102 zu steuern.

**Fig. 2** zeigt eine schematische Darstellung einer Seitenansicht eines Systems aufweisend zwei Fördereinrichtungen 102, 202 gemäß einer beispielhaften Ausführungsform der vorliegenden Erfindung.

Das System 100 kann ferner eine weitere Fördereinrichtung 202 und ein weiteres Stabmagazin 201 aufweisen. Die weitere Fördereinrichtung 202 ist eingerichtet, eine zweite Seite 204 eines weiteren Stapels 112 zu bilden, welche sich von einer ersten Seite 203 des Stapels 112 unterscheidet, auszubilden, indem die einzelnen Formstäbe 110 entlang einer weiteren Förderrichtung 206 verfahrbar sind, wobei das weitere Stabmagazin 201 entlang der weiteren Förderrichtung 206 hinter der Montageplattform 101 angeordnet ist. Somit werden zwei gegenüberliegende Stapel 112, 112' mit jeweils einer Fördereinrichtung 102, 202 mit Formstäben 110 bestückt. Durch den Einsatz der mehreren Fördereinrichtungen 102, 202 können zügig mehrere Seiten 203, 204 der entsprechenden Stapel 112 zum Bilden einer entsprechende Gussform 151 hergestellt werden.

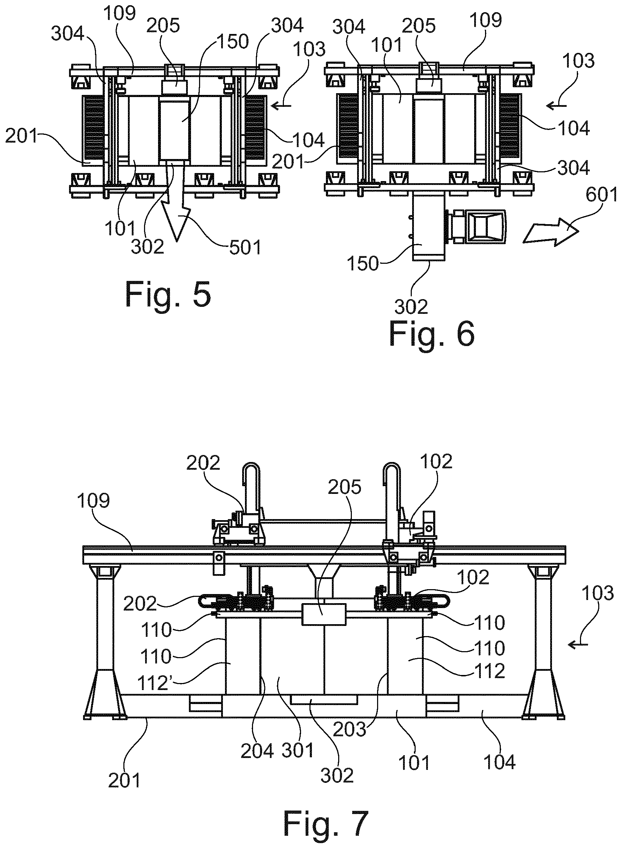

Ferner weist das System 100 eine Reinigungseinrichtung 205 zum Reinigen zumindest der Stirnflächen 111 der Formstäbe 110 auf. Die Reinigungseinrichtung 205 wird in der Ausführungsform aus Fig. 7 beschrieben.

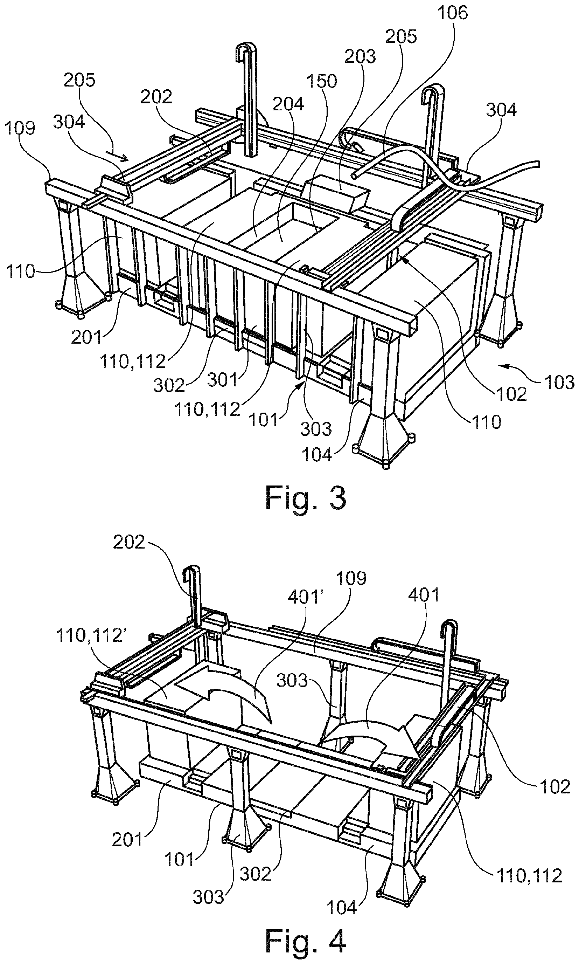

Zu Beginn eines Prozesses werden zunächst die Jobdaten, beispielsweise über das Internet, in die Steuereinrichtung 115 geladen und entsprechende Raumkoordinaten der einzelnen Formstäbe 110 auf der Montageplattform 101 ermittelt. Anschließend stapeln die Fördereinrichtungen 102 die Formstäbe 110 entsprechend den Raumkoordinaten. Dabei kann die Fördereinrichtung 102 und die weitere Fördereinrichtung 202 gleichzeitig zwei gegenüberliegende Stapel 112, 112' aufbauen. Jede vollständig gelegte Ebene eines Stapels 112 kann anschließend mittels der Presseinrichtung 107 in einer vertikalen Richtung von oben oder seitlich von einer Horizontalrichtung verklemmt werden. Nach Fertigstellung einer gelegten Ebene eines Stapels 112, 112' wird die Verklemmung aller zu vorgelegten Ebenen kurz gelöst und wieder geklemmt. So wird ein sogenanntes Nachsitzen durch das Eigengewicht der Formstäbe 110 ermöglicht und Spalte aufgrund von Stabtoleranzen werden geschlossen. Anschließend kann die Gussform 151 mit der Gießvorrichtung 106 mit Gussmaterial, beispielsweise Polyurethan, gefüllt werden, sodass das Material aushärten kann (Fig. 3).

**Fig. 3** zeigt eine perspektivische Darstellung eines Systems 100 aufweisend zwei Fördereinrichtungen 102, 202, wobei eine Gussform 151 mit Formstäben 110. Der Führungsrahmen 109 kann beispielsweise aus zwei gegenüberliegenden Führungsschienen bestehen, welche parallel zur Förderrichtung 103 verlaufen, und weitere Führungsschienen (bzw. Brücken 304), welche orthogonal zur Förderrichtung 103 verlaufen und die beiden gegenüberliegenden Führungsschienen verbindet. Somit kann die Fördereinrichtung 102, 202 jede Position einer Ebene des Stapels 112 erreichen und entsprechend die Formstäbe 110 ablegen oder anheben. Die Fördereinrichtungen 102, 202 können insbesondere Linearmotoren werden und exakt positioniert werden zu positionieren.

In dem vorliegenden Ausführungsbeispiel werden zwei gegenüberliegende Seiten 203, 204 gegenüberliegender Stapel 112, 112'mit einer entsprechenden Stapelung von Formstäben 110 gebildet. Die Seitenwände, welche die erste Seite 203 und die zweite Seite 204 verbindet, werden mit Dichtwänden 301 geschlossen, sodass eine geschlossene Gussform 151 entsteht. Am oberen Bereich kann die Gussform 151 zwischen den beiden Stapeln 112 eine Öffnung aufweisen, durch welche die Gießvorrichtung 106 das Gussmaterial einbringen kann. Beispielsweise können die äußersten Spalten von Formstäben 110 in eines Stapels 112 in Richtung Gussform 151 maximal ausgefahren werden, um somit eine entsprechende seitliche Dichtwand 301 zu generieren. Entsprechend kann beispielsweise eine untere Reihe und/oder eine obere Reihe von Formstäben 110 eines Stapels 112 maximal ausgefahren werden, um entsprechend einen Bodenbereich oder einen Deckel der Gussform 151 zu bilden. Die Dichtwände 301 können zusätzlich durch Verstärkungsbalken 303 gestützt werden, um eine stabile Gussform 151 zu bilden. Die Verstärkungsbalken 303 können ferner seitlich gegen den Stapel 112 drücken, um als Klemmvorrichtung die entsprechenden Stapel 112 zu verklemmen. Die Verstärkungsbalken 303 können beispielsweise mittels einer Antriebseinrichtung seitlich verfahren werden und somit von der Dichtwand oder dem Stapel 112 gelöst werden. Die Verstärkungsbalken 303, welche zeitlich die Montageplatte 302 abdecken, können beispielsweise entnommen werden, damit die Montageplatte 302 zeitlich entfernt werden kann. Die Dichtwand 301 kann beispielsweise planar oder gewölbt ausgebildet sein.

Ferner weist die Montageplattform 101 eine Montageplatte 302 auf, auf welcher das Gussmodel 150 gebildet werden kann. Die Montageplatte 302 kann austauschbar an der Montageplattform 101 befestigt sein.

**Fig. 4** zeigt eine perspektivische Darstellung eines Systems 100 aufweisend zwei Fördereinrichtungen 102, 202, wobei die Formstäbe 110 auf Stabmagazinen 104, 201 gelagert sind. Nach dem Gießen eines Gussmodells 150 können die einzelnen Formstäbe 110 entlang der Entformungsrichtung 401 auf die jeweiligen Stabmagazine 104, 201 gelagert werden, sodass anschließend eine neue Gussform 151 gebildet werden kann. Durch Adhäsion, Schrumpfung und andere Einflüsse kleben die Formstäbe 110 am Gussmodell 150. Insbesondere kann eine Zugkraft entgegen der Förderrichtung, d. h. entlang einer Entformungsrichtung 401 von 200 kg bis 400 oder 600 kg Zugkraft aufgebracht werden. Die eigentliche Formung wird durch die Fördereinrichtung 102, 202 durchgeführt. Die anderen Formstäbe 110 des Stapels 112 bleiben an dem Gussmodel 150 zur Stabilisierung haften.

**Fig. 5** und **Fig. 6** zeigen Draufsichten eines Systems 100, in welchen ein Entladevorgang eines Gussmodells 150 dargestellt wird. Die Montageplattform 101 weist die Montageplatte 302 auf, welche an der Montageplattform 101 lösbar befestigt ist. Die Montageplatte 302 bildet einen Boden der Gussform 151 aus. Das Gussmodel 150 kann somit auf der Montageplatte 302 gebildet und ausgehärtet werden. Anschließend kann das Gussmodel 150 zusammen mit der Montageplatte 302 aus der Montageplattform 101 entnommen werden und zu einer weiteren Fertigungseinrichtung 601, befördert werden.

Die Montageplatte 302 ist senkrecht zu der Förderrichtung 103 von der Montageplattform 101 entnehmbar. Insbesondere kann die Montageplattform 101 eine Öffnung mit zwei seitlichen Führungsschienen aufweisen, in welchen die Montageplatte 302 schubladenartig entlang der Entnahmerichtung 501 einschiebbar und ausschiebbar ist. Die Montageplatte 302 kann beispielsweise Rollen aufweisen, mit welchen diese über dem Boden verfahrbar ist. Die Montageplatte 302 kann anschließend mit einem Hilfsmittel, wie beispielsweise einem Stapler, aufgenommen und zu einer weiteren Fertigungseinrichtung, wie beispielsweise einen Ofen, befördert werden. Eine weitere leere Montageplatte kann anschließend in die Montageplattform 101 eingeschoben werden, sodass eine weitere Gussform 151 gebildet werden kann.

**Fig. 7** zeigt eine Seitenansicht eines Systems 100, in welchen ein Formstab 110 in einer Reinigungseinrichtung 205 vorliegt. Die Reinigungseinrichtung 205 ist beispielsweise oberhalb der Montageplattform 101, beispielsweise an dem Führungsrahmen 109 befestigt. Insbesondere kann die Reinigungseinrichtung 205 oberhalb und neben der Montageplattform 101 angeordnet sein, sodass das Befördern der Formstäbe 110 zur Gussform 151 nicht behindert wird. Die Reinigungseinrichtung 205 weist Reinigungselemente auf, welche beispielsweise ausgehärtete Formmasse auf den Formstäben 110 mechanisch löst. Die Reinigungseinrichtung 205 weist zumindest eine Öffnung auf, welche derart eingerichtet ist, dass ein Formstab 110 parallel zur Förderrichtung 103 mittels der Fördereinrichtungen 102, 202 eingefahrenen und ausgefahren werden kann. Somit kann die Fördereinrichtung 102, 202 nach dem Entfernen eines Formstabs 110 von dem Stapel 112 zunächst den Formstab 110 in die Reinigungseinrichtung 205 einbringen und anschließend den gereinigten Formstab 110 in dem Stabmagazin 104, 201 ablegen.

Insbesondere weist die Reinigungseinrichtung entlang der Förderrichtung 103 zwei gegenüberliegenden Öffnungen auf, wobei doch jeder Öffnung ein Reinigen der Formstab 110 individuell eingebracht werden kann. Beispielsweise kann ein erster Formstab 110 mittels der Fördereinrichtung 102 durch eine erste Öffnung in der Reinigungseinrichtung 205 eingebracht werden und ein zweiter Formstab 110 mittels der weiteren Fördereinrichtung 202 durch eine zweite Öffnung in die Reinigungseinrichtung 205 eingebracht werden. Somit ist beispielsweise eine gleichzeitige Reinigung von zwei Formstäben 110 möglich.

Ferner können zwei Reinigungsvorrichtungen 205 an einer Vorderseite und einer Rückseite der Montageplattform 101 angebracht werden, um eine schnellere Entformung eines Stapels 112 zu ermöglichen.

**Fig. 8** bis **Fig. 12** zeigen perspektivische Darstellungen von Formstäben 110 mit Aufnahmeöffnungen 801 für Koppelelemente.

Fig. 8 zeigt eine beispielhafte Ausführungsform eines rechteckigen Formstabs 110, welcher auf seiner oberen Oberfläche 803 ein Innengewinde aufweist, welches beispielsweise mittels eines Gewindeeinsatzes 802 gebildet wird. Das Koppelelement ist beispielsweise als Gewindestift ausgebildet und kann mittels der Fördereinrichtung 102 gesteuert werden. Beispielsweise kann die Fördereinrichtung 102 den Gewindestift exakt über der Aufnahmeöffnung 801 platzieren und anschließend eine Rotation des Gewindestifts initiieren, um somit ein Ein- und Ausschrauben in den Gewindeeinsatz 802 zu ermöglichen. Somit kann neben der Entformungskraft entlang der Entformungsrichtung 401 eine Hebekraft, d. h. eine vertikale Kraft, zwischen der Fördereinrichtung 102 und dem Formstab 110 übertragen werden, sodass ebenfalls ein Anheben des Formstabs 110 möglich ist.

Fig. 9 zeigt eine beispielhafte Ausführungsform eines rechteckigen Formstabs 110, welcher auf seiner oberen Oberfläche 803 eine Aufnahmeöffnung 801 für das Koppelelement aufweist. Die Aufnahmeöffnung 801 ist ausgebildet, um mit einem Bolzen als Koppelelement eine formschlüssige Kopplung bildet. Die Aufnahmeöffnung 801 weist entsprechend eine Vertiefungsrichtung in den Formstab 110 auf, welche senkrecht zu der Förderrichtung 103 bzw. der Entformungsrichtung 401 ausgebildet ist. Somit kann ein Bolzen als Koppelelement in die Aufnahmeöffnung 801 eingreifen und einen Formschluss bilden, sodass eine horizontale Kraft (Zugkraft bzw. Entformungskraft) entlang der Entformungsrichtung 401 aufgebracht werden kann.

Die Aufnahmeöffnung 801 weist einen rechteckigen Querschnitt und bildet eine Rechteck-Tasche mit einem Hinterschnitt 901 aus und der Bolzen ist zum Koppeln in der Aufnahmeöffnung 801 ausgebildet. Der Bolzen bildet ein einrastendes Gegenstück und kann als Kugelsperrbolzen 1101 (siehe Fig. 11) ausgebildet sein. Der Bolzen und/oder das Material des Formstabs 110, in welchem der Hinterschnitt 901ausgebildet ist, sind beispielsweise elastisch ausgebildet, so dass bei Eindrücken des Bolzens in die Aufnahmeöffnung 81 ein Koppelbereich des Bolzens (beispielsweise Kugel des Kugelsperrbolzens) sich mit dem Hinterschnitt 901 verhakt, sodass eine stabile Verbindung zwischen dem Bolzen und dem Formstab 110 hergestellt wird.

Fig. 10 zeigt eine weitere beispielhafte Ausführungsform eines Formstabs 110, wobei der Formstab 110 eine weitere Stirnfläche 1001 aufweist, welche der Stirnfläche 111 gegenüberliegt, wobei in der weiteren Stirnfläche 1001 die Aufnahmeöffnung 801 ausgebildet ist. In Fig. 10 ist ähnlich wie in Fig. 8 ein Innengewinde in der Aufnahmeöffnung 801 vorgesehen.

Fig. 11 zeigt eine weitere beispielhafte Ausführungsform eines Formstabs 110, wobei der Formstab 110 eine weitere Stirnfläche 1001 aufweist, welche der Stirnfläche 111 gegenüberliegt, wobei in der weiteren Stirnfläche 1001 die Aufnahmeöffnung 801 ausgebildet ist. In Fig. 10 ist ähnlich wie in Fig. 9 ein Kugelsperrbolzen zur Aufnahme in der Aufnahmeöffnung 801 vorgesehen.

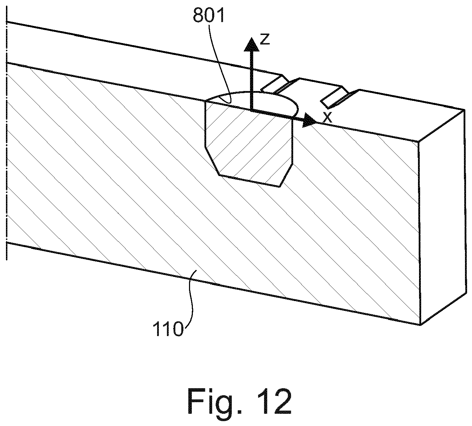

Fig. 12 zeigt eine beispielhafte Ausführungsform eines rechteckigen Formstabs 110, welcher auf seiner oberen Oberfläche 803 eine Aufnahmeöffnung 801 für das Koppelelement aufweist. Die Aufnahmeöffnung 801 ist als runde Tasche ausgebildet, welche einen konischen Endabschnitt aufweist, sodass gute Kopplung mit einem Bolzen der Fördereinrichtung möglich ist.

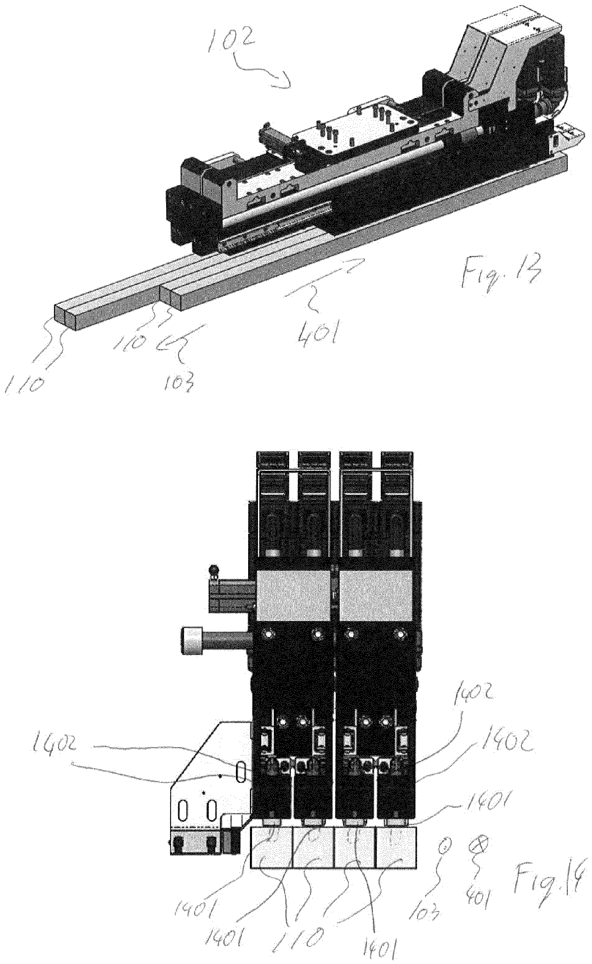

**Fig. 13** und **Fig. 14** zeigen eine perspektivische Darstellung einer Fördereinrichtung 102 gemäß einer beispielhaften Ausführungsform der vorliegenden Erfindung.

Die Fördereinrichtung 102 weist beispielsweise eine Vielzahl von quer zur Förderrichtung 103 nebeneinander angeordneter Schlitten 1402 auf, die entlang der Förderrichtung 103 verfahrbar angeordnet sind. Jeder Schlitten 1402 weist beispielsweise ein Koppelelement 1401, wie beispielsweise den in Figur 11 dargestellten Bolzen 1101 auf. Ein Schlitten oder mehrere Schlitten 1402 können selektiv voneinander entlang einer Entformungsrichtung 401 verfahren werden, um eine Entformungskraft auf die entsprechend angekoppelte Formstäbe 110 auszuüben. Die nicht verfahrenen Schlitten 1402, welche dennoch mit Formstäbe in 110 gekoppelt sind, übertragen über ihre Koppelelemente eine entsprechende Gegenkraft zur Entformungskraft auf den Stapel 112, sodass der Kraftfluss aufgrund der Entformung der Formstäbe 110 über den Stapel 112 der an dem Gussmodel 150 anhaftenden Formstäbe 110 abgeführt werden kann. Dadurch wird beispielsweise der Führungsrahmen 109, an welchem die Fördereinrichtung 102 befestigt ist, entlastet, da der Kraftfluss durch den Stapel 112 und nicht durch den Führungsrahmen 109 verläuft. Ferner kann die Fördereinrichtung 102 eine Auflagefläche aufweisen, mit welcher die Fördereinrichtung 102 auf den Formstäben 110, die nicht entfernt werden sollen, aufliegt. Somit kann die Gewichtskraft der Fördereinrichtung 102 direkt in den Stapel 112 eingeleitet werden, und der Führungsrahmen 109 entlastet werden.

Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können, wie in den Ansprüchen definiert. Bezugszeichen in den Ansprüchen sind nicht als Einschränkung anzusehen.

**Bezugszeichenliste:**

| | | | |
|---|---|---|---|
| 100 | System | 301 | Dichtwand |
| 101 | Montageplattform | 302 | Montageplatte |
| 102 | Fördereinrichtung | 303 | Verstärkungsbalken |
| 103 | Förderrichtung | 304 | Brücke |
| 104 | Stabmagazin | | |
| 105 | Vakuumsaugplatte | 401 | Entformungsrichtung |
| 106 | Gießvorrichtung | | |
| 107 | Presseinrichtung | 501 | Entnahmerichtung |
| 108 | Entformungskraft | | |
| 109 | Führungsrahmen | 601 | weitere Fertigungseinrichtung |
| 110 | Formstab | | |
| 111 | Stirnfläche | 801 | Aufnahmeöffnung |
| 112 | Stapel | 802 | Gewindeeinsatz |
| 113 | Vertikalrichtung | 803 | obere Oberfläche |
| 115 | Steuereinrichtung | 901 | Hinterschnitt |
| 150 | Gussmodell | 1001 | weitere Stirnfläche |
| 151 | Gussform | 1101 | Bolzen |
| 201 | weiteres Stabmagazin | | |
| 202 | weitere Fördereinrichtung | 1401 | Koppelelement |
| 203 | erste Seite eines Stapels | 1402 | Schlitten |
| 204 | zweite Seite eines weiteren Stapels | | |
| 205 | Reinigungseinrichtung | | |
| 206 | weitere Förderrichtung | | |

## Patentansprüche

1. System (100) zum flexiblen Ausbilden einer Gussform (151) und zum Herstellen eines Gussmodells (150), das System (100) aufweisend
eine Montageplattform (101),
eine Vielzahl von Formstäben (110) zum Ausbilden der Gussform (151), eine Fördereinrichtung (102) zum Fördern der Formstäbe (110) zu der Montageplattform (101),
wobei die Montageplattform (101) eine auf einem Boden definierte Auflagefläche für einen Stapel (112) der Formstäbe (110) ausbildet,
**dadurch gekennzeichnet, dass**
die Fördereinrichtung (102) ausgebildet ist die Formstäbe (110) zu greifen und auf der Montageplattform (101) derart abzulegen, dass ein Stapel (112) der Formstäbe (110) ausbildbar ist und dass eine Seite (203) des Stapels (112) mittels der Position der Formstäbe (110) ausbildbar ist, um einen Bereich (203) der Gussform (151) zu bilden, so dass zumindest eine Seite der Gussform (151) durch den Stapel (112) von Formstäben (110) ausbildbar ist.

2. System (100) gemäß Anspruch 1,
wobei die Fördereinrichtung (102) derart ausgebildet ist die Formstäbe (110) insbesondere lose an vorgegebenen Positionen im Stapel (112) abzulegen.

3. System (100) gemäß Anspruch 1 oder 2,
wobei der Stapel (112) aus nebeneinander und übereinander gelegten insbesondere parallelen Formstäben (110) ausbildbar ist, deren Position, insbesondere entlang einer Stabrichtung der Formstäbe (110), individuell für jeden Formstab mittels der Fördereinrichtung (102) einstellbar ist, und/oder wobei eine Oberfläche der Formstäbe (110), insbesondere eine Stirnfläche (111), zumindest eines Formstabes (110) planar, gewölbt oder abgewinkelt ausgebildet ist.

4. System (100) gemäß einem der Ansprüche 1 bis 3, ferner aufweisend
ein Stabmagazin (104) zum Lagern der Formstäbe (110),
wobei die Fördereinrichtung (102) eingerichtet ist, die Formstäbe (110) zwischen dem Stabmagazin (104) und der Montageplattform (101) zu befördern wobei das Stabmagazin (104) insbesondere entlang einer Förderrichtung (103) von dem Stabmagazin (104) zu der Montageplattform (101) hinter der Montageplattform (101) angeordnet ist.

5. System (100) gemäß einem der Ansprüche 1 bis 4,
wobei die Fördereinrichtung (102) eine Greifeinheit zum Greifen eines Formstabes (110) oder einer Mehrzahl von Formstäben (110) aufweist
wobei die Greifeinheit insbesondere als Vakuum-Greifeinheit mit zumindest einer Vakuumsaugplatte (105) derart ausgebildet ist, dass zur Stabfixierung die Vakuum Greifeinheit zumindest einen zu befördernden Formstab (110), insbesondere ausschließlich, an dessen Oberfläche (803) fixiert, und/oder wobei die Greifeinheit insbesondere als Magnet-Greifeinheit ausgebildet ist, dass zur Stabfixierung die Magnet-Greifeinheit zumindest einen zu befördernden Formstab (110), insbesondere ausschließlich, an dessen Oberfläche (803) magnetisch fixiert.

6. System (100) gemäß einem der Ansprüche 1 bis 5, ferner aufweisend einen Führungsrahmen (109) aufweisend aus zumindest einer Führungsschiene,
wobei der Führungsrahmen (109) über der Montageplattform (101) und beabstandet von dieser angeordnet ist,
wobei die Fördereinrichtung (102) an der Führungsschiene verfahrbar gekoppelt ist.

7. System (100) gemäß einem der Ansprüche 1 bis 6,
wobei die Fördereinrichtung (102) stationär eingerichtet ist und einen Roboterarm aufweist,
wobei der Roboterarm ausgebildet ist, den zumindest einen Formstab (110) zu greifen und auf der Montageplattform (101) zum Bilden des Stapels (112) abzulegen.

8. System (100) gemäß einem der Ansprüche 1 bis 7, ferner aufweisend
eine Dichtwand (301), welche auf der Montageplattform (101) derart anbringbar ist, dass eine weitere Seite der Gussform (151), welche frei von den Formstäben (110) ist abgedichtet ist, und/oder
eine Gießvorrichtung (106), welche eingerichtet ist, eine Formmasse in die Gussform (151) einzubringen.

9. System (100) gemäß einem der Ansprüche 1 bis 8,
wobei die Montageplattform (101) Transportanschlüsse aufweist, welche zum Koppeln mit einer Transporteinrichtung ausgebildet sind, um die Montageplattform (101), insbesondere mit dem Stapel (112), zu befördern. wobei das System (100) insbesondere ferner aufweist
eine Presseinrichtung (107), welche eingerichtet ist, auf den Stapel (112) und seitlich an den Stapel (112) zu drücken, um ein Verschieben der Stäbe zu unterbinden.

10. System (100) gemäß einem der Ansprüche 1 bis 9, wobei das System (100) zumindest eines der folgenden Merkmale aufweist:
wobei die Montageplattform (101) eine Montageplatte (302) aufweist, welche an der Montageplattform (101) lösbar befestigt ist,
wobei die Montageplatte (302) einen Boden der Gussform (151) ausbildet wobei die Montageplatte (302) insbesondere senkrecht zu der Förderrichtung (103) von der Montageplattform (101) entnehmbar ist; und
wobei die Fördereinrichtung (102) ausgebildet ist die Formstäbe (110) einzeln oder eine Gruppe an Formstäben (110) zu greifen und diese von dem Stapel (112) zu entnehmen und insbesondere entgegen der Förderrichtung (103) zu befördern.

11. System (100) gemäß einem der Ansprüche 1 bis 10,
wobei die Fördereinrichtung (102) ein Koppelelement aufweist, welches ausgebildet ist in eine Aufnahmeöffnung (801) eines Formstabes (110) derart einzugreifen, dass eine Entformungskraft (108) insbesondere entgegen der Förderrichtung (103) auf den Formstab (110) übertragbar ist,
wobei die Aufnahmeöffnung (801) insbesondere ein Innengewinde, insbesondere einen Gewindeeinsatz (802), aufweist und das Koppelelement als Gewindestift ausgebildet ist.

12. System (100) gemäß Anspruch 11,
wobei insbesondere das Koppelelement als Bolzen (1101) zum Ausbilden eines Formschlusses mit der Aufnahmeöffnung (801) ausgebildet ist, um die Entformungskraft (108) zu übertragen
wobei die Aufnahmeöffnung (801) insbesondere mit einem Hinterschnitt (901) ausgebildet ist und der Bolzen (1101) zum Koppeln in der Aufnahmeöffnung (801) ausgebildet ist,
wobei der Bolzen (1101) insbesondere als Kugelsperrbolzen ausgebildet ist, wobei zumindest insbesondere einer der Formstäbe (110) auf seiner Oberfläche (803) die Aufnahmeöffnung (801) aufweist,
wobei das Koppelelement senkrecht zur Fördereinrichtung (102) in die Aufnahmeöffnung (801) einkoppelbar ist,
wobei insbesondere die Fördereinrichtung (102) ein weiteres Koppelelement aufweist, welches ausgebildet ist in eine Aufnahmeöffnung (801) eines weiteren Formstabes (110) derart einzugreifen, dass eine Entformungskraft (108) insbesondere entgegen der Förderrichtung (103) auf einen weiteren Formstab (110) übertragbar ist,
wobei das Koppelelement und das weitere Koppelement insbesondere unabhängig voneinander entlang der Förderrichtung (103) verfahrbar ist, um selektiv eine Entformungskraft (108) entlang einer Entformungsrichtung (401) auf den Formstab (110) oder den weiteren Formstab (110) aufzubringen.

13. System (100) gemäß einem der Ansprüche 1 bis 12, ferner aufweisen eine Reinigungseinrichtung (205) zum Reinigen zumindest der Stirnflächen (111) der Formstäbe (110),
wobei die Reinigungseinrichtung (205) eine Reinigungsöffnung aufweist, durch welche ein zu reinigender Stab entlang der Förderrichtung (103) einschiebbar ist, wobei die Reinigungseinrichtung (205) insbesondere ein Spachtelelement aufweist, welches derart eingerichtet ist, dass bei Verfahren des Formstabs (110) in der Reinigungseinrichtung (205) das Spachtelelement entlang einer Oberfläche (803) und der Stirnfläche (111) des Formstabs (110) kratzt.

14. System (100) gemäß einem der Ansprüche 1 bis 13, ferner aufweisend eine Steuereinrichtung (115) zum Steuern der Fördereinrichtung (102), wobei die Steuereinrichtung (115) konfiguriert ist, basierend auf Modelldaten des herzustellenden Gussmodells (150) die Positionsdaten der einzelnen Formstäbe (110) zum Bilden der Gussform (151) zu bestimmen.

15. Verfahren zum flexiblen Ausbilden einer Gussform (151) und zum Herstellen eines Gussmodells (150), das Verfahren aufweisend
Fördern zumindest eines Formstabs (110) zu einer Montageplattform (101),
wobei die Montageplattform (101) eine auf einem Boden definierte Auflagefläche für einen Stapel (112) der Formstäbe (110) ausbildet,
**dadurch gekennzeichnet, dass**
eine Fördereinrichtung (102) ausgebildet ist die Formstäbe (110) zu greifen und auf der Montageplattform (101) derart abzulegen, dass ein Stapel (112) der Formstäbe (110) ausbildbar ist und dass eine Seite des Stapels (112) mittels der Position der Formstäbe (110) ausbildbar ist, um einen Bereich (203) der Gussform (151) zu bilden, so dass zumindest eine Seite der Gussform (151) durch den Stapel (112) von Formstäben (110) ausgebildet wird.

## Claims

1. A system (100) for flexibly forming a mold (151) and for manufacturing a model casting (150), the system (100) comprising
a mounting platform (101),
a plurality of mold rods (110) for forming the mold (151),
a conveying device (102) for conveying the mold rods (110) to the assembly platform (101),
wherein the mounting platform (101) constitutes a support surface defined on a floor for a stack (112) of the mold rods (110),
**characterized in that**
the conveying device (102) is adapted to grip the mold rods (110) and deposit them on the mounting platform (101) in such a way that a stack (112) of the mold rods (110) is formable and that one side (203) of the stack (112) is formable by means of the position of the mold rods (110) to form a portion (203) of the mold (151) so that at least one side of the mold (151) is formable by the stack (112) of mold rods (110).

2. The system (100) according to claim 1,
wherein the conveying device (102) is configured to deposit the mold rods (110), in particular loosely, at predetermined positions in the stack (112).

3. The system (100) according to claim 1 or 2,
wherein the stack (112) can be formed from mold rods (110), in particular parallel mold rods (110), which are laid next to and on top of one another and the position of which, in particular along a rod direction of the mold rods (110), can be set individually for each mold rod by means of the conveying device (102), and/or
wherein a surface of the mold rods (110), in particular an end surface (111), of at least one mold rod (110) is planar, curved or angled.

4. The system (100) according to any one of claims 1 to 3, further comprising a rod magazine (104) for storing the mold rods (110),
wherein the conveying device (102) is configured to convey the mold rods (110) between the rod magazine (104) and the mounting platform (101) wherein the rod magazine (104) is arranged in particular along a conveying direction (103) from the rod magazine (104) to the mounting platform (101) behind the mounting platform (101).

5. The system (100) according to any one of claims 1 to 4,
wherein the conveying device (102) comprises a gripping unit for gripping a mold rod (110) or a plurality of mold rods (110),
wherein the gripping unit is designed in particular as a vacuum gripping unit with at least one vacuum suction plate (105) in such a way that for rod fixation the vacuum gripping unit fixates at least one mold rod (110) to be conveyed, in particular exclusively, to its surface (803), and/or
wherein the gripping unit is designed in particular as a magnetic gripping unit, that for rod fixation the magnetic gripping unit magnetically fixates at least one mold rod (110) to be conveyed, in particular exclusively, to its surface (803).

6. The system (100) according to any one of claims 1 to 5, further comprising a guide frame (109) comprising at least one guide rail,
wherein the guide frame (109) is disposed above and spaced apart from the mounting platform (101),
wherein the conveying device (102) is movably coupled to the guide rail.

7. The system (100) according to any one of claims 1 to 6,
wherein the conveying device (102) is stationary and comprises a robot arm, wherein the robotic arm is configured to grasp the at least one mold rod (110) and deposit it on the mounting platform (101) to form the stack (112).

8. The system (100) according to any one of claims 1 to 7, further comprising
a sealing wall (301) which is placeable on the mounting platform (101) in such a way that a further side of the mold (151), which is free of the mold rods (110), is sealed, and/or
a casting device (106) which is arranged to introduce a molding compound into the mold (151).

9. The system (100) according to any one of claims 1 to 8,
wherein the mounting platform (101) comprises transport connections configured for coupling with a transport device to transport the assembly platform (101), in particular with the stack (112),
wherein the system (100) in particular further comprises
a pressing device (107) adapted to press on the stack (112) and laterally against the stack (112) to prevent displacement of the rods.

10. The system (100) according to any one of claims 1 to 9, wherein the system (100) comprises at least one of the following features:
wherein the mounting platform (101) includes a mounting plate (302) that is removably attached to the mounting platform (101),
wherein the mounting plate (302) forms a bottom of the mold (151),
wherein the mounting plate (302) is removable from the mounting platform (101), in particular perpendicular to the conveying direction (103); and
wherein the conveying device (102) is configured to grip the mold rods (110) individually or to grip a group of shaping rods (110) and to remove them from the stack (112) and, in particular, to convey them against the conveying direction (103).

11. The system (100) according to any one of claims 1 to 10,
wherein the conveying device (102) comprises a coupling element which is configured to engage in a receiving opening (801) of a mold rod (110) in such a way that a demolding force (108) can be transferred to the mold rod (110), in particular against the conveying direction (103),
wherein the receiving opening (801) comprises in particular an internal thread, in particular a threaded insert (802), and the coupling element is designed as a threaded pin.

12. The system (100) according to claim 11,
wherein in particular the coupling element is formed as a bolt (1101) for forming a form fit with the receiving opening (801) in order to transfer the demolding force (108),
wherein the receiving opening (801) is formed in particular with an undercut (901) and the bolt (1101) is formed for coupling in the receiving opening (801), wherein the bolt (1101) is configured in particular as a ball locking bolt,
wherein at least in particular one of the mold rods (110) comprises the receiving opening (801) on its surface (803),
wherein the coupling element can be coupled into the receiving opening (801) perpendicular to the conveying device (102),
wherein in particular the conveying device (102) comprises a further coupling element which is designed to engage in a receiving opening (801) of a further mold rod (110) in such a way that a demolding force (108) can be transferred to a further mold rod (110) in particular against the conveying direction (103), wherein the coupling element and the further coupling element are movable, in particular independently of each other, along the conveying direction (103) in order to selectively apply a demolding force (108) along a demolding direction (401) to the mold rod (110) or the further mold rod (110).

13. The system (100) according to any one of claims 1 to 12, further comprising a cleaning device (205) for cleaning at least the end faces (111) of the mold rods (110),
wherein the cleaning device (205) comprises a cleaning opening through which a rod to be cleaned can be inserted along the conveying direction (103),
wherein the cleaning device (205) comprises in particular a spatula element which is configured in such a way that, when the shaping rod (110) is moved in the cleaning device (205), the spatula element scrapes along a surface (803) and the end face (111) of the shaping rod (110).

14. The system (100) according to any one of claims 1 to 13, further comprising
a control device (115) for controlling the conveying device (102),
wherein the control device (115) is configured to determine the position data of the individual mold rods (110) for forming the mold (151) based on model data of the model casting (150) to be manufactured.

15. A method for flexibly forming a mold (151) and for manufacturing a model casting (150), the method comprising conveying at least one mold rod (110) to a mounting platform (101),
wherein the mounting platform (101) constitutes a support surface defined on a floor for a stack (112) of the mold rods (110),
**characterized in that**
a conveying device (102) is adapted to grip the mold rods (110) and deposit them on the mounting platform (101) in such a way that a stack (112) of the mold rods (110) is formable and that one side of the stack (112) is formable by means of the position of the mold rods (110) to form a portion (203) of the mold (151) so that at least one side of the mold (151) is formed by the stack (112) of mold rods (110).

## Revendications

1. Système (100) de réalisation flexible d'un moule de fonte (151) et de fabrication d'un modèle de fonte (150), le système (100) présentant
une plate-forme de montage (101),
une pluralité de barres de moulage (110) pour réaliser le moule de fonte (151),
un dispositif de convoyage (102) pour convoyer les barres de moulage (110) vers la plate-forme de montage (101),
dans lequel la plate-forme de montage (101) réalise une surface de support définie sur un fond pour un empilement (112) des barres de moulage (110),
**caractérisé en ce que**
le dispositif de convoyage (102) est réalisé pour saisir les barres de moulage (110) et les déposer sur la plate-forme de montage (101) de telle manière qu'un empilement (112) des barres de moulage (110) peut être réalisé, et qu'un côté (203) de l'empilement (112) peut être réalisé au moyen de la position des barres de moulage (110) pour former une zone (203) du moule de fonte (151) de sorte qu'au moins un côté du moule de fonte (151) peut être réalisé par l'empilement (112) de barres de moulage (110) .

2. Système (100) selon la revendication 1,
dans lequel le dispositif de convoyage (102) est réalisé de manière à déposer les barres de moulage (110) en particulier de manière lâche sur des positions prédéfinies dans l'empilement (112).

3. Système (100) selon la revendication 1 ou 2,
dans lequel l'empilement (112) peut être réalisé à partir de barres de moulage (110) placées côte à côte et les unes au-dessus des autres, en particulier parallèles, dont la position, en particulier le long d'un sens de barre des barres de moulage (110), peut être réglée individuellement pour chaque barre de moulage au moyen du système de convoyage (102), et/ou
dans lequel une surface des barres de moulage (110), en particulier une face frontale (111), d'au moins une barre de moulage (110), est réalisée de manière planaire, de manière bombée ou de manière coudée.

4. Système (100) selon l'une quelconque des revendications 1 à 3, présentant en outre un magasin de barres (104) pour entreposer les barres de moulage (110),
dans lequel le dispositif de convoyage (102) est mis au point pour convoyer les barres de moulage (110) entre le magasin de barres (104) et la plate-forme de montage (101),
dans lequel le magasin de barres (104) est disposé en particulier le long d'un sens de convoyage (103) depuis le magasin de barres (104) vers la plate-forme de montage (101) derrière la plate-forme de montage (101).

5. Système (100) selon l'une quelconque des revendications 1 à 4,
dans lequel le système de convoyage (102) présente une unité de préhension pour saisir une barre de moulage (110) ou une pluralité de barres de moulage (110),
dans lequel l'unité de préhension est réalisée en particulier en tant qu'unité de préhension sous vide avec au moins une plaque d'aspiration sous vide (105) de telle manière qu'aux fins du blocage de barre, l'unité de préhension sous vide bloque au moins une barre de moulage (110) à convoyer, en particulier exclusivement, sur sa surface (803), et/ou
dans lequel l'unité de préhension est réalisée en particulier en tant qu'unité de préhension magnétique, qu'aux fins du blocage de barre, l'unité de préhension magnétique bloque magnétiquement au moins une barre de moulage (110) à convoyer, en particulier exclusivement, sur sa surface (803).

6. Système (100) selon l'une quelconque des revendications 1 à 5, présentant en outre
un cadre de guidage (109) composé d'au moins un rail de guidage,
dans lequel le cadre de guidage (109) est disposé au-dessus de la plate-forme de montage (101) et à distance de celle-ci,
dans lequel le dispositif de convoyage (102) est couplé de manière à pouvoir être déplacé sur le rail de guidage.

7. Système (100) selon l'une quelconque des revendications 1 à 6,
dans lequel le dispositif de convoyage (102) est mis au point de manière stationnaire et présente un bras robotisé,
dans lequel le bras robotisé est réalisé pour saisir l'au moins une barre de moulage (110) et la déposer sur la plate-forme de montage (101) pour former l'empilement (112) .

8. Système (100) selon l'une quelconque des revendications 1 à 7, présentant en outre
une paroi étanche (301), laquelle peut être installée de telle manière sur la plate-forme de montage (101) qu'un autre côté du moule de fonte (151), qui est sans barres de moulage (110), est étanchéifié, et/ou
un équipement de coulée (106) qui est mis au point pour introduire une matière à mouler dans le moule de fonte (151) .

9. Système (100) selon l'une quelconque des revendications 1 à 8,
dans lequel la plate-forme de montage (101) présente des raccords de transport, lesquels sont réalisés pour être couplés à un dispositif de transport pour convoyer la plate-forme de montage (101), en particulier avec l'empilement (112),
dans lequel le système (100) présente en particulier en outre
un dispositif de pressage (107) qui est mis au point pour exercer une pression sur l'empilement (112) et latéralement sur l'empilement (112) pour empêcher un coulissement des barres.

10. Système (100) selon l'une quelconque des revendications 1 à 9, dans lequel le système (100) présente au moins une des caractéristiques suivantes :
dans lequel la plate-forme de montage (101) présente une plaque de montage (302), laquelle est fixée de manière amovible sur la plate-forme de montage (101),
dans lequel la plaque de montage (302) réalise un fond du moule de fonte (151),
dans lequel la plaque de montage (302) peut être retirée de la plate-forme de montage (101) en particulier de manière perpendiculaire par rapport au sens de convoyage (103) ; et
dans lequel le dispositif de convoyage (102) est réalisé pour saisir individuellement les barres de moulage (110) ou un groupe de barres de moulage (110) et retirer celles-ci de l'empilement (112) et en particulier les convoyer dans le sens inverse au sens de convoyage (103).

11. Système (100) selon l'une quelconque des revendications 1 à 10,
dans lequel le système de convoyage (102) présente un élément de couplage, lequel est réalisé pour venir en prise avec une ouverture de logement (801) d'une barre de moulage (110) de telle manière qu'une force de démoulage (108) peut être transmise en particulier dans le sens inverse au sens de convoyage (103) sur la barre de moulage (110),
dans lequel l'ouverture de logement (801) présente en particulier un filetage intérieur, en particulier un insert fileté (802), et l'élément de couplage est réalisé en tant que tige filetée.

12. Système (100) selon la revendication 11,
dans lequel en particulier l'élément de couplage est réalisé en tant qu'axe (1101) pour réaliser une complémentarité de forme avec l'ouverture de logement (801) pour transmettre la force de démoulage (108),
dans lequel l'ouverture de logement (801) est réalisée en particulier avec une contre-dépouille (901) et l'axe (1101) est réalisé pour être couplé dans l'ouverture de logement (801),
dans lequel l'axe (1101) est réalisé en particulier en tant qu'axe de verrouillage à billes,
dans lequel au moins une des barres de moulage (110) présente sur sa surface (803) l'ouverture de logement (801),
dans lequel l'élément de couplage peut être accouplé dans l'ouverture de logement (801) de manière perpendiculaire par rapport au sens de convoyage (102),
dans lequel en particulier le dispositif de convoyage (102) présente un autre élément de couplage, lequel est réalisé pour venir en prise avec une ouverture de logement (801) d'une autre barre de moulage (110) de telle manière qu'une force de démoulage (108) peut être transmise en particulier dans le sens inverse au sens de convoyage (103) sur une autre barre de moulage (110),
dans lequel l'élément de couplage et l'autre élément de couplage peuvent être déplacés en particulier indépendamment l'un de l'autre le long du sens de convoyage (103) pour appliquer au choix une force de démoulage (108) le long d'un sens de démoulage (401) sur la barre de moulage (110) ou l'autre barre de moulage (110).

13. Système (100) selon l'une quelconque des revendications 1 à 12, présentant en outre
un dispositif de nettoyage (205) pour nettoyer au moins les faces frontales (111) des barres de moulage (110),
dans lequel le dispositif de nettoyage (205) présente une ouverture de nettoyage par laquelle une barre à nettoyer peut être enfilée le long du sens de convoyage (103),
dans lequel le dispositif de nettoyage (205) présente en particulier un élément formant grattoir, lequel est mis au point de telle manière que lors du déplacement de la barre de moulage (110) dans le dispositif de nettoyage (205), l'élément formant grattoir gratte le long d'une surface (803) et de la face frontale (111) de la barre de moulage (110).

14. Système (100) selon l'une quelconque des revendications 1 à 13, présentant en outre
un dispositif de commande (115) pour commander le dispositif de convoyage (102),
dans lequel le dispositif de commande (115) est configuré pour définir sur la base de données de modèle du modèle de fonte (150) à fabriquer les données de position des diverses barres de moulage (110) pour former le moule de fonte (151).

15. Procédé de réalisation flexible d'un moule de fonte (151) et de fabrication d'un modèle de fonte (150), le procédé présentant
le convoyage d'au moins une barre de moulage (110) vers une plate-forme de montage (101),
dans lequel la plate-forme de montage (101) réalise une surface de support définie sur un fond pour un empilement (112) des barres de moulage (110),
**caractérisé en ce que**
un dispositif de convoyage (102) est réalisé pour saisir les barres de moulage (110) et pour les déposer sur la plate-forme de montage (101) de telle manière qu'un empilement (112) des barres de moulage (110) peut être réalisé, et qu'un côté de l'empilement (112) peut être réalisé au moyen de la position des barres de moulage (110) pour former une zone (203) du moule de fonte (151) de sorte qu'au moins un côté du moule de fonte (151) est réalisé par l'empilement (112) de barres de moulage (110).
